# EUROPEAN PATENT SPECIFICATION

(11) **EP 3 162 688 B1**
(45) Date of publication and mention of the grant of the patent: **01.08.2018**
(21) Application number: 16191760.4
(22) Date of filing: 30.09.2016
(51) Int. Cl.: B62K 21/18, B62K 5/027, B62K 5/05, B62K 5/08, B62K 5/10, B62H 5/06, B60R 25/021

(54) **VEHICLE**
FAHRZEUG
VÉHICULE

(30) Priority: 30.09.2015 JP 2015194215
(43) Date of publication of application: 03.05.2017
(73) Proprietor: Yamaha Hatsudoki Kabushiki Kaisha, Iwata-shi, Shizuoka 438-8501 (JP)
(72) Inventor: OHNO, Kohsuke, Iwata-shi, Shizuoka 438-8501 (JP); YOSHIKUNI, Hiroyuki, Iwata-shi, Shizuoka 438-8501 (JP); HIRAKAWA, Nobuhiko, Iwata-shi, Shizuoka 438-8501 (JP)
(74) Representative: Grünecker Patent- und Rechtsanwälte PartG mbB

(56) References cited:
- EP-A1- 2 899 105
- CN-A- 1 749 092
- DE-U1-202009 017 382
- JP-A- S5 920 782
- JP-A- 2000 001 188
- JP-A- 2012 206 585
- US-A1- 2014 284 899

## Description

The present invention relates to a vehicle including a body frame that can lean and two front wheels that are aligned side by side in a left-and-right direction.

Patent Document 1 describes a vehicle including a body frame that can lean and two wheels that are aligned in a left-and-right direction. This vehicle includes a link mechanism.

The link mechanism includes an upper cross member and a lower cross member. In addition, the link mechanism also includes a right side member that is connected to right portions of the upper cross member and the lower cross member, and left side member that is connected to left portions of the upper cross member and the lower cross member.

Middle portions of the upper cross member and the lower cross member are supported on the body frame. The upper cross member and the lower cross member are supported on the body frame so as to turn about axes that extend substantially in a front-and-rear direction of the body frame.

The upper cross member and the lower cross member turn relative to the body frame as the body frame leans, whereby a relative position between the two front wheels in an up-and-down direction of the body frame changes. The upper cross member and the lower cross member are provided above the two front wheels in the up-and-down direction of the body frame in such a state that the vehicle is standing upright.

This link mechanism supports the right front wheel and the left front wheel so as to move in the up-and-down direction of the body frame. The link mechanism supports the right front wheel so as to turn about a right steering axis that extends in the up-and-down direction of the body frame and supports the left front wheel so as to turn about a left steering axis that is parallel to the right steering axis.

This vehicle includes a handlebar, a steering shaft and a tie-rod. The handlebar is fixed to the steering shaft. The steering shaft is supported so as to turn relative to the body frame. When the handlebar is turned, the steering shaft is also turned. The tie-rod transmits the turn of the steering shaft to the right front wheel and the left front wheel to thereby turn the right front wheel about the right steering axis and turn the left front wheel about the left steering axis.

### [Prior Art Literature]

[Patent Literature 1] International Patent Publication No. 2014/046282, also published under EP 2 899 105 A1.

In the vehicle described in Patent Literature 1, the handlebar turns about an axis that extends in the up-and-down direction of the body frame, and the upper cross member and the lower cross member of the link mechanism turn about the axes that extend in the front-and-rear direction of the body frame. Owing to this, the handlebar is disposed above the iink mechanism so as to avoid the interference with the link mechanism.

When attempting to develop a vehicle having a larger engine displacement than that of the vehicle described in Patent Literature 1, greater rigidity is required on the link mechanism, and this enlarges the link mechanism in size, whereby the handlebar position is eventually raised. Alternatively, when attempting to develop a vehicle having a larger maximum banking angle than that of the vehicle described Patent literature 1, the movable range of the link mechanism is enlarged, whereby the handlebar position is eventually raised.

However, the handlebar needs to be provided in a position where a rider sitting on the seat can extend his or her arms to reach it, and therefore, it becomes difficult to set freely the handlebar position.

The inventor of this invention has considered the possibility of enhancing the degree of freedom in setting the handlebar position in order to enhance the usability of the handlebar by the rider by providing the handlebar in a low position where the rider can easily extend his or her arms to reach the handlebar.

In the vehicle described in Patent Literature 1, a steering force that is inputted into the handlebar is transmitted to the tie-rod by the single steering shaft. Then, the inventor has considered a construction in which a steering shaft is divided into two shaft members that are connected to each other, so that a steering force inputted into a handlebar is transmitted to a tie-rod by a mechanism having the two shaft members.

Compared with the vehicle described in patent Literature 1, in the vehicle in which the steering force is transmitted to the tie-rod by the mechanism having the two shaft members, there are fears that the vehicle is enlarged in size because a connecting member is added to connect the two shaft members on top of the addition of one shaft member.

Further, when attempting to mount on this vehicle a steer lock mechanism that locks the right front wheel and the left front wheel so as not to be steered or turned, this may call for a further enlargement in size of the vehicle.

To cope with this, an object of the present invention is to provide a vehicle having a steer lock mechanism without a risk of enlarging the size of the vehicle while seeking for enhancement in usability of the handlebar by the rider.

According to the present invention said object is solved by a vehicle having the features of independent claim 1.
(1) A vehicle having:
   a body frame that can lean to the right of the vehicle when the vehicle turns right and can lean to the left of the vehicle when the vehicle turns left;
   a right front wheel and a left front wheel that are provided so as to be aligned side by side in a left-and-right direction of the body frame;
   a link mechanism that has a cross member that is configured to turn about a link axis that is configured to extend in a front-and-rear direction of the body frame relative to the body frame, which is configured to support the right front wheel and the left front wheel so as to be displaced relatively in an up-and-down direction of the body frame and which is configured to support the right front wheel so as to turn about a right steering axis that is configured to extend in the up-and-down direction of the body frame and is configured to support the left front wheel so as to turn about a left steering axis that is parallel to the right steering axis;
   a steering force transmission mechanism that has a steering force input portion that is situated between the right steering axis and the left steering axis when seen from the front of the vehicle and which is provided so as to turn about a middle steering axis that is parallel to the right steering axis and which is configured to transmit a steering force that is inputted into the steering force input portion to the right front wheel and the left front wheel; and
   a steer lock mechanism that makes it impossible for the right front wheel and the left front wheel to be steered, wherein
   the steering force transmission mechanism has:
      a rear shaft member into which a steering force is inputted from the steering force input portion and which can turn about a rear steering axis;
      a front shaft member that is situated ahead of the rear shaft member in relation to the front-and-rear direction of the body frame and which can turn about a front steering axis; and
      a connecting member that is configured to transmit the turning of the rear shaft member to the front shaft member, wherein
      a distance between the front shaft member and the right steering axis is smaller than a distance between the rear shaft member and the right steering axis when seen from the side of the vehicle, and wherein
      the front shaft member or a member that is configured to turn together with the front shaft member and at least part of the steer lock mechanism that is mounted on a member that is displaced relative to the front shaft member or the member are provided in a position that is configured to overlap a movable range of the link mechanism when seen from the side of the vehicle.

In the vehicle according to the invention, the steering force transmission mechanism that transmits the steering force that is inputted into the steering force input portion to the right front wheel and the left front wheel includes the rear shaft member into which the steering force is inputted from the steering force input portion, the front shaft member and the connecting member that connects the rear shaft member and the front shaft member together. Owing to this, compared with the case where the steering force that is inputted into the steering force input portion is transmitted to the right front wheel and the left front wheel by the single steering shaft, the degree of freedom in designing the arrangement of the steering force input portion becomes high. Owing to this, the steering force input portion can be disposed in a position or posture that enables a rider to use the steering force input portion easily enhance the usability of the rider.

Further, the vehicle is prevented from being enlarged in size by the following reason.

The steering force transmission mechanism includes the front shaft member and the rear shaft member. In the target vehicle of the invention, when seen from the side of the vehicle, the distance between the front shaft member and the right steering axis is smaller than the distance between the rear shaft member and the right steering axis. Namely, the rear shaft member is spaced farther away from the link mechanism than the front shaft member. Owing to this, it is considered that in case the steer lock mechanism is provided on the circumference of the rear shaft member, the interference of the steer lock mechanism with the link mechanism is avoided easily, thereby making it possible to prevent the enlargement in size of the vehicle.

In the event that the lock mechanism is provided on the circumference of the rear shaft member, however, in case the connecting member is broken which connects together the rear shaft member and the front shaft member, the front shaft member is allowed to turn even though the rear shaft member is locked, leading to fears that the locked state of the right front wheel and the left front wheel is released. Owing to this, it is necessary that the strength of the connecting member is enhanced so as not to be broken and that the connecting member is protected from an external access thereto. The inventor of this invention has noticed that in case the strength of the connecting member is enhanced in the way described above, the connecting member has to be enlarged in size and an additional cover is necessary to protect the connecting member, as a result of which an enlargement in size of the vehicle is called for.

Then, the inventor of the invention has studied a challenging provision of the steer lock mechanism on the circumference of the front shaft member. In case the lock mechanism is disposed on the circumference of the front shaft member, even though the connecting member is broken, the locked state of the right front wheel and the left front wheel can be maintained. Owing to this, the inventor of the invention has considered that the vehicle can be prevented from being enlarged in size since the necessity is obviated of enhancing the strength of the connecting member or providing the additional cover to prevent the breakage of the connecting member.

Firstly, in case the steer lock mechanism is attempted to be disposed on the left or right of the front shaft member in relation to the left-and-right direction of the body frame, since the front shaft member and the link mechanism are disposed close to each other, the steering lock mechanism is easy to interfere with the link mechanism, and hence, it becomes difficult to arrange the steer lock mechanism. In order to avoid the interference of the steer lock mechanism with the link mechanism, the steer lock mechanism has to be placed in a position that is spaced away from the link mechanism in the left-and-right direction of the body frame, which is not realistic.

Then, it is considered that the steer lock mechanism is provided ahead or behind the link mechanism in relation to the front-and-rear direction of the body frame to provide the steer lock mechanism in a position where the interference thereof with the link mechanism is avoided while preventing the enlargement in size of the vehicle. Compared with the vehicle in which the steering force transmission mechanism has the single steering shaft, however, the vehicle in which the steering force transmission mechanism has the two shaft members of the front shaft member and the rear shaft member tends to be easily enlarged in size in the front-and-rear direction of the body frame. Owing to this, in case the steer lock mechanism is provided ahead or behind the link mechanism in relation to the front-and-rear direction of the body frame, the size of the vehicle is enlarged further in the front-and-rear direction.

Then, the inventor of the invention has considered that at least part of the steer lock mechanism is provided in a position that overlaps a movable range of the link mechanism when seen from the side of the vehicle. The cross member of the link mechanism turns about the link axis that extends in the front-and-rear direction of the body frame. Owing to this, for example, in case at least part of the steer lock mechanism is provided on the circumference of the link axis of the cross member, it becomes difficult for the steer lock mechanism to interfere with the link mechanism. The inventor of the invention has found out that the steer lock mechanism can be disposed without interfering with the link mechanism even in the area which overlaps the movable range of the link mechanism when seen from the side of the vehicle. In addition, by providing the steer lock mechanism, in the way described above, so that at least part of the steer lock mechanism overlaps the movable range of the link mechanism when seen from the side of the vehicle, the vehicle is prevented from being enlarged in size in the front-and-rear direction.

The movable range of the link mechanism means a solid that is formed by an outer edge of an imaginary solid that is formed by the passage of a member making up the link mechanism when the vehicle is caused to lean from a right maximum banking position to a left maximum banking position. A non-movable range formed by a member such as a headstock that is not displaced when the vehicle is caused to lean may be included inside the movable range of the link mechanism.
(2) In the vehicle according to the invention,
   when seen from the front of the vehicle that is standing upright, at least part of the steer lock mechanism may be provided above or below the cross member.
   Being different from the invention, in the event that at least part of the steer lock mechanism projects to the left or right of the cross member when seen from the front of the vehicle that is standing upright, the vehicle tends to be enlarged in size in the left-and-right direction. According to the vehicle described under (2), however, since the steer lock mechanism is provided above or below the cross member when seen from the front of the vehicle that is standing upright, it is difficult for the vehicle to be enlarged in size in the left-and-right direction.
(3) In the vehicle according to the invention, when the vehicle is divided into three areas of a right portion, a middle portion and a left portion in the left-and-right direction of the body frame when seen from the front of the vehicle that is standing upright, at least part of the steer lock mechanism may be situated in the middle portion.
   According to the vehicle configured as described under (3), since at least part of the steer lock mechanism is situated in the middle portion, it becomes difficult for the vehicle to be enlarged in size in the left-and-right direction.
   The cross member of the link mechanism turns about the link axis that extends in the front-and-rear direction of the body frame. Owing to this, in case at least part of the steer lock mechanism is disposed in the middle portion in the left-and-right direction of the body frame, it becomes difficult for the steer lock mechanism to interfere with the link mechanism.
(4) In the vehicle according to the invention,
   the connecting member may be a link that is connected to the front shaft member or the rear shaft member via a turning axis that is different from the front steering axis or the rear steering axis so as to turn and which is displaced as the rear shaft member turns to thereby turn the front shaft member.
   According to the vehicle configured as described under (4), the connecting member is easy to be configured, and the degree of freedom in designing the connecting member is easy to be enhanced.
(5) In the vehicle according to the invention,
   the connecting member may have a right element that is provided on the right of the front shaft member in relation to the left-and-right direction of the body frame to thereby connect the front shaft member and the rear shaft member together and a left element that is provided on the left of the front shaft member in relation to the left-and-right direction of the body frame to thereby connect the front shaft member and the rear shaft member together.
   According to the vehicle configured as described under (5), compared with the case where the connecting member connects the front shaft portion and the rear shaft portion together by the single element, the rigidity of the connecting member is easy to be enhanced.
(6) In the vehicle according to the invention,
   the steer lock mechanism may have:
   a first portion that is attached to the front shaft member or a member that is configured to turn together with the front shaft member; and
   a second portion that is attached to a member that is displaced relative to the front shaft member or the member that is configured to turn together with the front shaft member,
   the first portion and the second portion are brought into abutment with each other so as to make it impossible for the first portion and the second portion to be displaced relatively to thereby make it impossible for the right front wheel and the left front wheel to turn, and
   an abutment portion between the first portion and the second portion may be provided on one side of the front shaft member in the left-and-right direction of the body frame, and the connecting member may be provided on the other side of the front shaft member in the left-and-right direction of the body frame.

   According to the vehicle configured as described under (6), the abutment portion between the first portion and the second portion of the steer lock mechanism is disposed on the one side of the front shaft member and the connecting member is disposed on the other side of the front shaft member in relation to the left-and-right direction of the body frame. Consequently, it becomes difficult for the abutment portion between the first portion and the second portion to interfere with the connecting member.
(7) In the vehicle according to the invention,
   the steer lock mechanism may have:
   a first portion that is attached to the front shaft member or a member that is configured to turn together with the front shaft member; and
   a second portion that is attached to a member that is displaced relative to the front shaft member or the member that is configured to turn together with the front shaft member,
   a pin member that is activated to operate by an actuator may be provided on one of the first portion and the second portion,
   a pin receiving portion that is configured to receive the pin member may be provided on the other of the first portion and the second portion, and
   the actuator may be activated to operate to bring the pin member into abutment with the pin receiving portion so as to make it impossible for the first portion and the second portion to turn relatively to thereby make it impossible for the right front wheel and the left front wheel to turn.

   According to the vehicle configured as described under (7), the pin member can be brought into abutment with the pin receiving portion by the actuator, which obviates the necessity of disposing the steer lock mechanism in a position where the rider can easily reach the steer lock mechanism to operate it manually. Owing to this, the steer lock mechanism can be provided, for example, in an interior of the vehicle to which it is difficult to access from the exterior, thereby enhancing the degree of freedom in the arrangement of the steer lock mechanism.
(8) In the vehicle according to the invention,
   the front steering axis and the rear steering axis may be parallel.
   According to the vehicle configured as described under (8), since the front axis and the rear axis are parallel, the necessity is obviated of using a complex construction for transmitting a steering force from the rear shaft member to the front shaft member by changing the turning angle, thereby making it possible to configure the connecting member by using the simple construction.
(9) In the vehicle according to the invention,
   a steer stopper mechanism that is configured to restrict a maximum steering angle of the right front wheel and the left front wheel may be mounted on the front shaft member or the member that is configured to turn together with the front shaft member and a member that is displaced relative to the front shaft member when the front shaft member is configured to turn, and
   at least part of the steer stopper mechanism may be provided in a position that is configured to overlap a movable range of the link mechanism when seen from the side of the vehicle.

   High rigidity is also required on the steer stopper mechanism and the members on which the steer stopper mechanism is mounted as required on the steer lock mechanism and the members on which the steer lock mechanism is mounted. High rigidity is required on the steer stopper mechanism so as to cope with an external force that is exerted on the right front wheel, the left front wheel and the steering force input portion in an attempt to increase further the steering angle of the right front wheel and the left front wheel in such a state that the right front wheel and the left front wheel are steered to the maximum steering angle. In addition, high rigidity is also required on a member on which the steer stopper mechanism is mounted.
   Then, according to the vehicle configured as described under (9), the front shaft member or the member that turns together with the front shaft member and the member that is displaced relative to the front shaft member, on all of which the steer lock mechanism is mounted, have high rigidity. Since the steer stopper mechanism is mounted on these members having the high rigidity, the supporting rigidity of the steer stopper mechanism becomes high.
(10) In the vehicle according to the invention,
   a steer stopper mechanism that is configured to restrict a maximum steering angle of the right front wheel and the left front wheel may be mounted on the rear shaft member or a member that is configured to turn together with the rear shaft member and a member that is displaced relative to the rear shaft member when the rear shaft member is configured to turn.
   According to the vehicle configured as described under (10), since it becomes difficult for the steer stopper mechanism to interfere with the link mechanism, it becomes difficult for the vehicle to be enlarged in size.
(11) In the vehicle according to the invention,
   the front shaft member on which the steer lock mechanism is provided may be thicker than the rear shaft member.
   According to the vehicle configured as described under (11), the steer lock mechanism can be supported with high rigidity by using the front shaft member having the high rigidity.
(12) In the vehicle according to the invention,
   the link mechanism may have:
   a right side member that is configured to support the right front wheel so as to turn about a right steering axis that is configured to extend in an up-and-down direction of the body frame; and
   a left side member that is configured to support the left front wheel so as to turn about a left steering axis that is parallel to the right steering axis,
   the cross member may have:
      an upper cross member that is configured to support an upper portion of the right side member at a right end portion thereof so as to allow the upper portion to turn about a right upper axis that is configured to extend in a front-and-rear direction of the body frame, which is configured to support an upper portion of the left side member at a left end portion thereof so as to allow the upper portion to turn about a left upper axis that is parallel to the right upper axis and which is supported on the body frame at a middle portion thereof so as to turn about a middle upper axis that is parallel to the right upper axis; and
      a lower cross member that is configured to support a lower portion of the right side member at a right end portion thereof so as to allow the lower portion to turn about a right lower axis that is configured to extend in the front-and-rear direction of the body frame, which is configured to support a lower portion of the left side member at a left end portion thereof so as to allow the lower portion to turn about a left lower axis that is parallel to the right upper axis and which is supported on the body frame at a middle portion thereof so as to turn about a middle lower axis that is parallel to the right upper axis, and
      the front shaft member on which the steer lock mechanism is provided may be longer than a distance between the middle upper axis and the middle lower axis.

   According to the vehicle configured as described under (12), the steer lock mechanism can be provided at any location along the axial direction of the long front shaft member. The degree of freedom in selecting the location where to place the steer lock mechanism is enhanced. Since the degree of freedom in selecting the location where to place the steer lock mechanism is high, for example, the steer lock mechanism can be provided at the location where it becomes difficult for the steer lock mechanism to interfere with the other members.
(13) In the vehicle according to the invention,
   the front shaft member on which the steer lock mechanism is provided may be thicker than an upper end portion of the right side member or an upper end portion of the left side member.
   According to the vehicle configured as described under (13), it is easy to ensure the rigidity of the front shaft member.
(14) In the vehicle according to the invention,
   the front shaft member on which the steer lock mechanism is provided may be longer than the right side member or the left side member.
   According to the vehicle configured as described under (14), the steer lock mechanism can be provided at any location along the axial direction of the long front shaft member. The degree of freedom in selecting the location where to place the steer lock mechanism is enhanced. Since the degree of freedom in selecting the location where to place the steer lock mechanism is high, for example, the steer lock mechanism can be provided at the location where it becomes difficult for the steer lock mechanism to interfere with the other members.
(15) In the vehicle according to the invention,
   the cross member may have an upper cross member and a lower cross member that is provided below the upper cross member,
   the body frame may have an upper supporting portion that is configured to support the upper cross member so as to turn and a lower supporting portion that is configured to support the lower cross member so as to turn, and
   the front shaft member is configured to penetrate the body frame so that the front shaft member is configured to pass the upper supporting portion and the lower supporting portion when seen from the front of the vehicle.

   According to the vehicle configured as described under (15), part of the body frame where the upper supporting portion and the lower supporting portion are provided is given enhanced rigidity in order to support the upper cross member and the lower cross member with high rigidity. The front shaft member is provided so as to penetrate part of the body frame whose rigidity is so enhanced, and therefore, the vehicle can be configured compact in size while avoiding the interference of the link mechanism with the steering force transmission mechanism.
   In particular, in the event that part of the body frame where the upper supporting portion and the lower supporting portion are provided is made up of the pipe-shaped member, part of the body frame can be configured highly rigid and light in weight. In case the front shaft member is caused to penetrate the interior of the pipe-shaped body frame, the vehicle can be configured compact in size while avoiding the interference of the link mechanism with the steering force transmission mechanism.
(16) In the vehicle according to the invention,
   the body frame may have a link supporting portion that is configured to support the cross member so as to turn,
   the cross member may have a front cross element that is situated ahead of the link supporting portion and a rear cross element that is situated behind the link supporting portion, and
   the front steering axis of the front shaft member may be situated between a front end of the front cross element and a rear end of the rear cross element.

   According to the vehicle configured as described under (16), when the link mechanism is activated to operate, the front cross element and the rear cross element turn about the link axis that extends in the front-and-rear direction of the body frame. Consequently, even though the front shaft member is provided between the front cross element and the rear cross element, the front shaft member does not interfere with the front cross element and the rear cross element when the link mechanism is activated to operate. Thus, the vehicle can be configured compact in size while preventing the interference.
(17) In the vehicle according to the invention,
   the body frame may have a pipe-shaped link supporting portion that is configured to support the cross member so as to turn,
   the front shaft member may be provided coaxially with the pipe-shaped link supporting portion, and
   at least part of the front shaft member may be inserted into an interior of the pipe-shaped link supporting portion.

According to the vehicle configured as described under (17), the link supporting portion that supports the cross member so as to turn is made up of the pipe-shaped member, and therefore, the link supporting portion can be configured highly rigid and light in weight. At least part of the front shaft member is inserted into the interior of the pipe-shaped link supporting portion, and therefore, the vehicle can be configured compact in size while configuring the link supporting portion highly rigid and light in weight and avoiding the interference of the link mechanism with the steering force transmission mechanism.

### [Brief Description of Drawings]

[Fig. 1] Fig. 1 is a side view showing the whole of a vehicle according to an embodiment of the invention as seen from a left side thereof.
[Fig. 2] Fig. 2 is a front view showing a front portion of the vehicle shown in Fig. 1.
[Fig. 3] Fig. 3 is a side view showing a left shock absorbing device and a left front wheel.
[Fig. 4] Fig. 4 is a plan view showing the front portion of the vehicle shown in Fig. 1.
[Fig. 5] Fig. 5 is a plan view showing the front portion of the vehicle shown in Fig. 1 when the vehicle is steered.
[Fig. 6] Fig. 6 is a front view showing the front portion of the vehicle shown in Fig. 1 when the vehicle is caused to lean.
[Fig. 7] Fig. 7 is a front view showing the front portion of the vehicle shown in Fig. 1 when the vehicle is caused to lean while being steered.
[Fig. 8] Fig. 8 is a side view showing a steering force transmission mechanism.
[Fig. 9] Fig. 9 is a plan view showing the steering force transmission mechanism.
[Fig. 10] Fig. 10 is a perspective view showing the front portion of the vehicle.
[Fig. 11] Fig. 11 is a front view showing the steering force transmission mechanism.
[Fig. 12] Fig. 12 is a plan view showing schematically a link supporting portion, a headstock, a right frame, and a left frame.
[Fig. 13] Fig. 13 is a side view showing a link supporting portion and a downstream side steering shaft according to Modified Example 1 of the invention.
[Fig. 14] Fig. 14 is a schematic top view of a connecting member of a vehicle according to Modified Example 2 of the invention.
[Fig. 15] Fig. 15 is a schematic top view of a connecting member of a vehicle according to Modified Example 3 of the invention.
[Fig. 16] Fig. 16 is a top view of a steering force transmission mechanism of a vehicle according to Modified Example 4 of the invention.

### [Mode for Carrying out the Invention]

Referring to the accompanying drawings, an example of the embodiment will be described in detail below.

In the accompanying drawings, an arrow F denotes a front or forward direction of a vehicle. An arrow B denotes a back/rear or backward/rearward direction of the vehicle. An arrow U denotes an up or upward direction of the vehicle. An arrow D denotes a down or downward direction of the vehicle. An arrow R denotes a right or rightward direction of the vehicle. An arrow L denotes a left or leftward direction of the vehicle.

A vehicle turns with a body frame leaning in a left-and-right direction of the vehicle relative to a vertical direction. Then, in addition to the directions based on the vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-and-rear direction of the body frame," a "left-and-right direction of the body frame" and an "up-and-down direction of the body frame" means a front-and-rear direction, a left-and-right direction and an up-and-down direction based on the body frame as viewed from a rider who rides the vehicle. "A side of or sideways of the body frame" means directly on the right or left of the body frame. "A side of or sideways of the body frame" means directly on the right or left of the body frame.

In this description, an expression reading "something extends in the front-and-rear direction of the body frame" includes a situation in which something extends while being inclined in relation to the front-and-rear direction of the body frame and means that something extends with a gradient which is closer to the front-and-rear direction of the body frame rather than the left-and-right direction and the up-and-down direction of the body frame.

In this description, an expression reading "something extends in the left-and-right direction of the body frame" includes a situation in which something extends while being inclined in relation to the left-and-right direction of the body frame and means that something extends with a gradient which is closer to the left-and-right direction of the body frame rather than the front-and-rear direction of the body frame and the up-and-down direction of the body frame.

In this description, an expression reading "something extends in the up-and-down direction of the body frame" includes a situation in which something extends while being inclined in relation to the up-and-down direction of the body frame and means that something extends with a gradient which is closer to the up-and-down direction of the body frame rather than the front-and-rear direction of the body frame and the left-and-right direction of the body frame.

In this description, an expression reading the "body frame stands upright or is in an upright state" means a state in which the up-and-down direction of the body frame coincides with the vertical direction in such a state that the vehicle is kept not steered at all. In this state, the directions based on the vehicle and the directions based on the vehicle frame coincide with each other. When the vehicle is turning with the body frame caused to lean to the left or right direction from the vertical direction, the left-and-right direction of the vehicle does not coincide with the left-and-right direction of the body frame. Likewise, the up-and-down direction of the vehicle does not coincide with the up-and-down direction of the body frame. However, the front-and-rear direction of the vehicle coincides with the front-and-rear direction of the body frame.

In this description, "rotation or rotating" means that a member is displaced at an angle of 360 degrees or more about a center axis thereof. In this description, "turning" means that a member is displaced at an angle of less than 360 degrees about a center axis thereof.

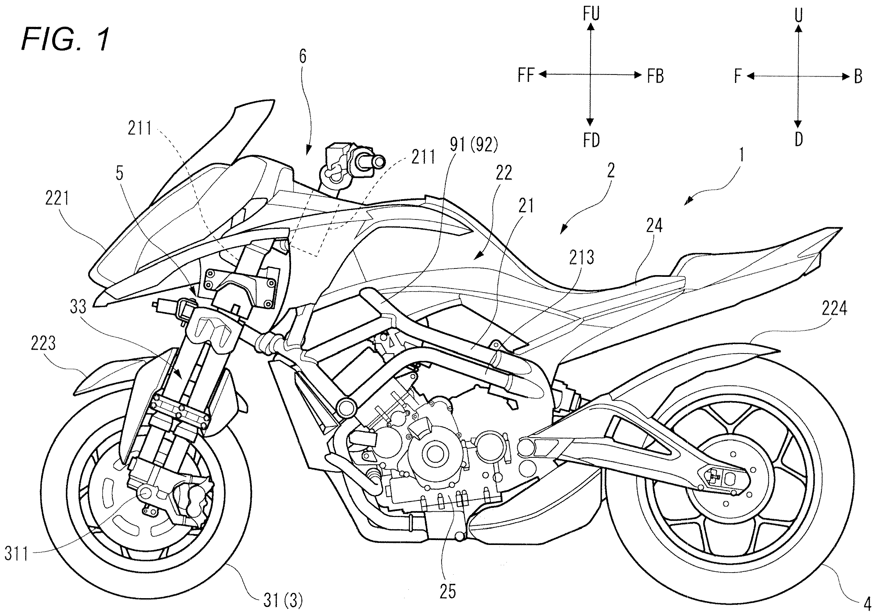

Referring to Figs. 1 to 7, a vehicle 1 according to an embodiment of the invention will be described. The vehicle 1 is a vehicle which is driven by means of power generated from a power source and which includes a body frame which can leans and two front wheels which are aligned side by side in a left-and-right direction of the body frame.

Fig. 1 is a left side view showing the whole of the vehicle 1 as viewed from the left thereof. The vehicle 1 includes a vehicle main body portion 2, a pair of left and right front wheels 3, a rear wheel 4, a link mechanism 5 and a steering force transmission mechanism 6.

The vehicle main body portion 2 includes a body frame 21, a body cover 22, a seat 24 and an engine unit 25. In Fig. 1, the vehicle 1 is standing upright or is in an upright state. The following description which will be made by reference to Fig. 1 is based on the premise that the vehicle 1 is standing in the upright state.

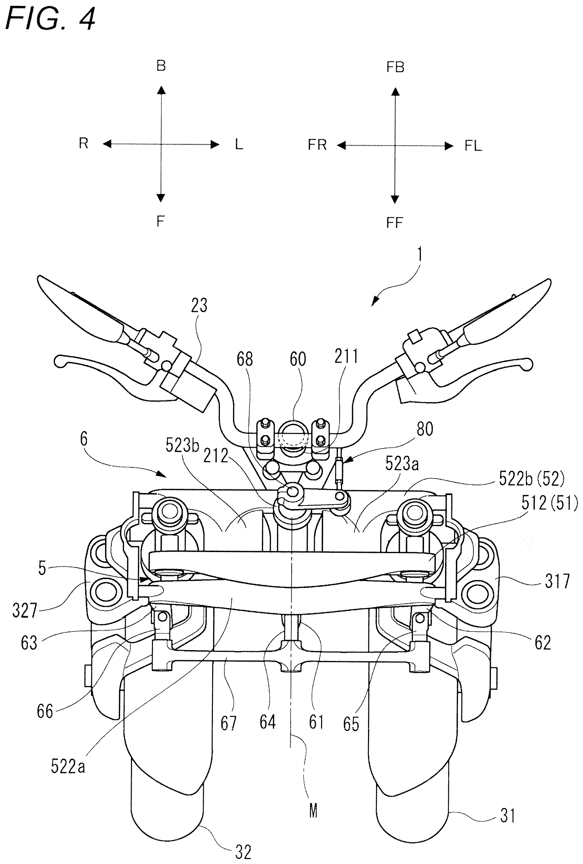

The body frame 21 extends in the front-and-rear direction of the vehicle 1. The body frame 21 includes a headstock 211 (refer to Fig. 4: an example of a rear shaft supporting portion), a link supporting portion 212 (refer to Fig. 4: an example of a front shaft supporting portion), an engine supporting portion 213, a left frame 91 and a right frame 92.

The headstock 211 supports an upstream side steering shaft 60, which will be described later, so as to turn. The headstock 211 extends in an up-and-down direction of the body frame 21.

The link supporting portion 212 is provided ahead of the headstock 211 in a front-and-rear direction of the vehicle 1. The link supporting portion 212 supports the link mechanism 5 so as to turn.

The engine supporting portion 213 is provided behind the headstock 211 in the front-and-rear direction of the vehicle 1. The engine supporting portion 213 supports the engine unit 25. The engine unit 25 supports the rear wheel 4 so as to allow the oscillation thereof. The engine unit 25 includes a power source such as an engine, an electric motor, a battery or the like and a device such as a transmission. The power source generates a force by which the vehicle 1 is driven.

The right frame 92 is provided on the right of the left frame 91 in relation to a left-and-right direction of the vehicle. The right frame 92 and the left frame 91 have a laterally symmetrical shape. The left frame 91 and the right frame 92 connect the headstock 211, the link supporting portion 212 and the engine supporting portion 213 together.

The body cover 22 includes a front cover 221, a pair of left and right front mudguards 223 and a rear mudguard 224. The body cover 22 is a body part which covers at least part of body parts which are mounted on the vehicle 1 such as the pair of left and right front wheels 3, the body frame 21, the link mechanism 5 and the like.

The front cover 221 is disposed ahead of the seat 24. The front cover 221 covers the link mechanism 5 and at least a part of the steering force transmission mechanism 6.

At least portions of the pair of left and right front mudguards 223 are individually disposed directly below the front cover 221. At least portions of the pair of left and right front mudguards 223 are disposed directly above the pair of left and right front wheels 3, respectively.

At least a portion of the rear mudguard 224 is disposed directly above the rear wheel 4.

At least portions of the pair of left and right front wheels 3 are disposed directly below the front cover 221.

At least portion of the rear wheel 4 is disposed below the seat 24. At least portion of the rear wheel 4 is disposed directly below the rear fender 224.

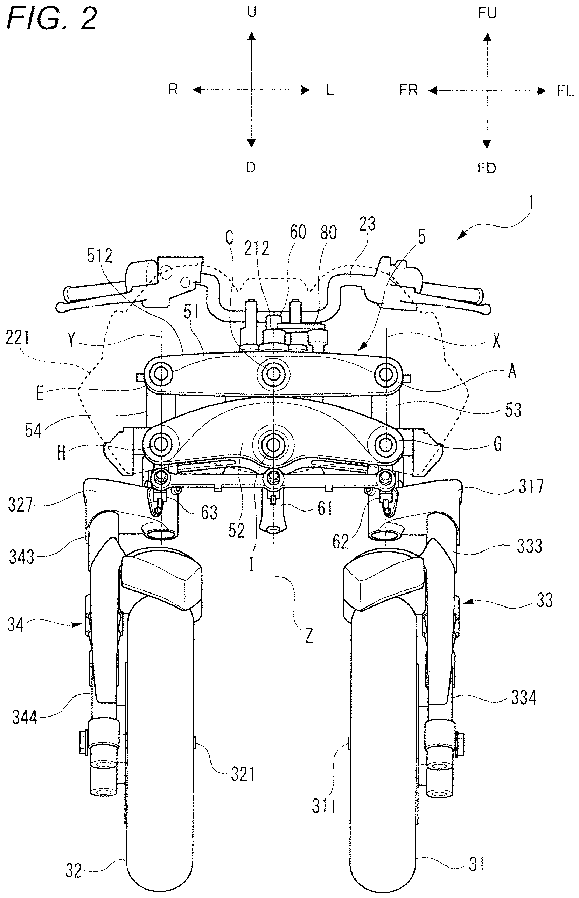

Fig. 2 is a front view of the front portion of the vehicle 1 as viewed from the front of the body frame 21. In Fig. 2, the vehicle 1 is standing in an upright state. The following description which will be made by reference to Fig. 2 is based on the premise that the vehicle 1 is standing upright or in the upright state. Fig. 2 shows the front portion of the vehicle 1 as it were seen through the front cover 221 that is indicated by dashed lines.

The pair of left and right front wheels 3 include a left front wheel 31 and a right front wheel 32. The left front wheel 31 and the right front wheel 32 are provided so as to be aligned side by side in the left-and-right direction of the body frame 21. The right front wheel 32 is provided on the right of the left front wheel 31 on the body frame 21.

The vehicle 1 includes a left shock absorbing device 33, a right shock absorbing device 34, a left bracket 317 and a right bracket 327.

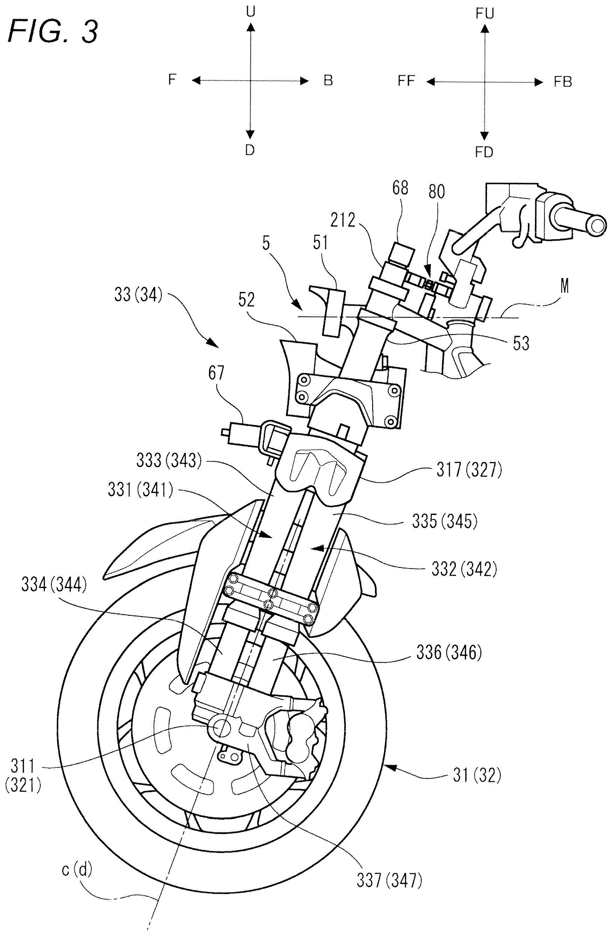

Fig. 3 is a side view showing the left shock absorbing device 33 and the left front wheel 31. The right shock absorbing device 34 and the left shock absorbing device 33 are constructed laterally symmetrically with each other, and therefore, reference numerals denoting the right shock absorbing device 34 are also written in Fig. 3.

As shown in Fig. 3, the left shock absorbing device 33 is a so-called telescopic shock absorbing device. The left shock absorbing device 33 has a left front telescopic element 331, a left rear telescopic element 332 and a left inner connecting element 337.

The left front telescopic element 331 has a left front outer tube 333 and a left front inner tube 334. A lower portion of the left front inner tube 334 is connected to the left inner connecting element 337. An upper portion of the left front inner tube 334 is inserted into the left front outer tube 333. An upper portion of the left front outer tube 333 is connected to the left bracket 317. The left front inner tube 334 is displaced relative to the left front outer tube 333 along a left extending and contracting axis c that extends in the up-and-down direction of the body frame 21. The left front telescopic element 331 can extend and contract in the direction of the left extending and contracting axis c as a result of the left front inner tube 334 being displaced relative to the left front outer tube 333 along the left extending and contracting axis c.

At least part of the left rear telescopic element 332 is provided behind the left front telescopic element 331. The left rear telescopic element 332 has a left rear outer tube 335 and a left rear inner tube 336. The left rear outer tube 335 and the left front outer tube 333 are connected together so as not to move.

A lower portion of the left rear inner tube 336 is connected to the left inner connecting element 337. An upper portion of the left rear inner tube 336 is inserted into the left rear outer tube 335. An upper portion of the left rear outer tube 335 is connected to the left bracket 317.

The left rear inner tube 336 is displaced relative to the left rear outer tube 335 along the left extending and contracting axis c that extends in the up-and-down direction of the body frame 21. The left rear telescopic element 332 can extend and contract in the direction of the left extending and contracting axis c as a result of the left rear inner tube 336 being displaced relative to the left rear outer tube 335 along the left extending and contracting axis c.

The left inner connecting element 337 supports a left axle member 311 of the left front wheel 31 rotatably. The left inner connecting element 337 connects a lower portion of the left front inner tube 334 and a lower portion of the left rear inner tube 336 together.

The left shock absorbing device 33 attenuates the displacement of the left front wheel 31 relative to the left front outer tube 333 and the left rear outer tube 335 along the left extending and contracting axis c as a result of the left front telescopic element 331 extending or contracting and the left rear telescopic element 332 extending or contracting.

As shown in Fig. 3, the right shock absorbing device 34 is a so-called telescopic shock absorbing device. The right shock absorbing device 34 has a right front telescopic element 341, a right rear telescopic element 342 and a right inner connecting element 347.

The right front telescopic element 341 has a right front outer tube 343 and a right front inner tube 344. A lower portion of the right front inner tube 344 is connected to the right inner connecting element 347. An upper portion of the right front inner tube 344 is inserted into the right front outer tube 343. An upper portion of the right front outer tube 343 is connected to the right bracket 327. The right front inner tube 344 is displaced relative to the right front outer tube 343 along a right extending and contracting axis d that extends in the up-and-down direction of the body frame 21. The right front telescopic element 341 can extend and contract in the direction of the right extending and contracting axis d as a result of the right front inner tube 344 being displaced relative to the right front outer tube 343 along the right extending and contracting axis d.

At least part of the right rear telescopic element 342 is provided behind the right front telescopic element 341. The right rear telescopic element 342 has a right rear outer tube 345 and a right rear inner tube 346. The right rear outer tube 345 and the right front outer tube 343 are connected together so as not to move.

A lower portion of the right rear inner tube 346 is connected to the right inner connecting element 347. An upper portion of the right rear inner tube 346 is inserted into the right rear outer tube 345. An upper portion of the right rear outer tube 345 is connected to the right bracket 327.

The right rear inner tube 346 is displaced relative to the right rear outer tube 345 along the right extending and contracting axis d that extends in the up-and-down direction of the body frame 21. The right rear telescopic element 342 can extend and contract in the direction of the right extending and contracting axis d as a result of the right rear inner tube 346 being displaced relative to the right rear outer tube 345 along the right extending and contracting axis d.

The right inner connecting element 347 supports a right axle member 321 of the right front wheel 32 rotatably. The right inner connecting element 347 connects a lower portion of the right front inner tube 344 and a lower portion of the right rear inner tube 346 together.

The right shock absorbing device 34 attenuates the displacement of the right front wheel 32 relative to the right front outer tube 343 and the right rear outer tube 345 along the right extending and contracting axis d as a result of the right front telescopic element 341 extending or contracting and the right rear telescopic element 342 extending or contracting.

As shown in Fig. 4, the vehicle 1 includes the steering force transmission mechanism 6. The steering force transmission mechanism 6 includes a handlebar 23 (an example of a steering force input portion), the upstream side steering shaft 60 (the example of the rear shaft member), a connecting member 80, and a downstream side steering shaft 68 (an example of a front shaft member).

The body frame 21 includes the headstock 211 that supports the upstream side steering shaft 60 so as to turn and the link supporting portion 212 that supports the downstream side steering shaft 68 so as to turn. The link supporting portion 212 extends in the direction of a middle steering axis Z that extends in the up-and-down direction of the body frame 21, as shown in Fig. 2. In this embodiment, a turning center (a middle steering axis) of the handlebar 23 coincides with a turning center (a rear axis) of the upstream side steering shaft.

A steering force is inputted into the handlebar 23. The upstream side steering shaft 60 is connected to the handlebar 23. An upper portion of the upstream side steering shaft 60 is situated behind a lower portion of the upstream side steering shaft 60 in a front-and-rear direction of the body frame 21. The upstream side steering shaft 60 is supported in the headstock 211 so as to turn.

The connecting member 80 connects the upstream side steering shaft 60 and the downstream side steering shaft 68 together. The connecting member 80 is displaced as the upstream side steering shaft 60 turns. The connecting member 80 transmits the turning of the upstream side steering shaft 60 to the downstream side steering shaft 68.

The downstream side steering shaft 68 is supported in the link supporting portion 212 so as to turn. The downstream side steering shaft 68 is connected to the connecting member 80. The downstream side steering shaft 68 is provided ahead of the upstream side steering shaft 60 in the front-and-rear direction of the body frame 21. The downstream side steering shaft 68 turns as the connecting member 80 is displaced. As a result of the downstream side steering shaft 68 turning, the left front wheel 31 and the right front wheel 32 are steered via a tie-rod 67.

The steering force transmission mechanism 6 transmits a steering force exerted on the handlebar 23 by the rider when operating the handlebar 23 to the left bracket 317 and the right bracket 327. A specific configuration will be described in detail later.

In the vehicle 1 according to this embodiment, the link mechanism 5 adopts a four parallel joint link system (also referred to as a parallelogram link).

As shown in Fig. 2, the link mechanism 5 is disposed above the left front wheel 31 and the right front wheel 32. The link mechanism 5 includes an upper cross member 51, a lower cross member 52, a left side member 53 and a right side member 54. The link mechanism 5 is supported so as to turn by the link supporting portion 212 that extends in the direction of the middle steering axis Z. Even though the upstream side steering shaft 60 is turned as a result of the operation of the handlebar 23, the link mechanism 5 is kept from following the rotation of the upstream side steering shaft 60 and does not turn.

The upper cross member 51 includes a plate member 512. The plate member 512 is disposed ahead of the link supporting portion 212. The plate member 512 extends in the left-and-right direction of the body frame 21.

A middle portion of the upper cross member 51 is connected to the link supporting portion 212 by a connecting portion C. The upper cross member 51 can turn relative to the link supporting portion 212 about a middle upper axis M that passes through the connecting portion C and extends in the front-and-rear direction of the body frame 21.

A left end portion of the upper cross member 51 is connected to the left side member 53 by a connecting portion A. The upper cross member 51 can turn relative to the left side member 53 about a left upper axis that passes through the connecting portion A to extend in the front-and-rear direction of the body frame 21.

A right end portion of the upper cross member 51 is connected to the right side member 54 by a connecting portion E. The upper cross member 51 can turn relative to the right side member 54 about a right upper axis that passes through the connecting portion E to extend in the front-and-rear direction of the body frame 21.

Fig. 4 is a plan view of the front portion of the vehicle 1 as seen from above the body frame 21. In Fig. 4, the vehicle 1 is standing upright. The following description which will be made by reference to Fig. 4 is based on the premise that the vehicle 1 is standing upright.

As shown in Fig. 4, the lower cross member 52 includes a front plate member 522a and a rear plate member 522b. The front plate member 522a is disposed ahead of the link supporting portion 212. The rear plate member 522b is disposed behind the link supporting portion 212. The front plate member 522a and the rear plate member 522b extend in the left-and-right direction of the body frame 21. The front plate member 522a and the rear plate member 522b are connected together by a left connecting block 523a and a right connecting block 523b. The left connecting block 523a is disposed on the left of the link supporting portion 212. The right connecting block 523b is disposed on the right of the link supporting portion 212.

Returning to Fig. 2, the lower cross member 52 is disposed below the upper cross member 51. The lower cross member 52 extends parallel to the upper cross member 51. A middle portion of the lower cross member 52 is connected to the link supporting portion 212 by a connecting portion I. The lower cross member 52 can turn about a middle lower axis that passes through the connecting portion I to extend in the front-and-rear direction of the body frame 21.

A left end portion of the lower cross member 52 is connected to the left side member 53 by a connecting portion G. The lower cross member 52 can turn about a left lower axis that passes through the connecting portion G to extend in the front-and-rear direction of the body frame 21.

A right end portion of the lower cross member 52 is connected to the right side member 54 by a connecting portion H. The lower cross member 52 can turn about a right lower axis that passes through the connecting portion H to extend in the front-and-rear direction of the body frame 21. A length of the upper cross member 51 from the connecting portion E to the connecting portion A is substantially equal to a length of the lower cross member from the connecting portion H to the connecting portion G.

The middle upper axis M, the right upper axis, the left upper axis, the middle lower axis, the right lower axis and the left lower axis extend parallel to one another. The middle upper axis M, the right upper axis, the left upper axis, the middle lower axis, the right lower axis and the left lower axis are disposed above the left front wheel 31 and the right front wheel 32.

As shown in Figs. 2 and 4, the left side member 53 is disposed on the left of the link supporting portion 212. The left side member 53 is disposed above the left front wheel 31. The left side member 53 extends parallel to the middle steering axis Z of the link supporting portion 212. An upper portion of the left side member 53 is disposed behind a lower portion thereof.

A lower portion of the left side member 53 is connected to the left bracket 317. The left bracket 317 can turn about a left steering axis X relative to the left side member 53. The left steering axis X extends parallel to the middle steering axis Z of the link supporting portion 212.

As shown in Figs. 2 and 4, the right side member 54 is disposed on the right of the link supporting portion 212. The right side member 54 is disposed above the right front wheel 32. The right side member 54 extends parallel to the middle steering axis Z of the link supporting portion 212. An upper portion of the right side member 54 is disposed behind a lower portion thereof.

A lower portion of the right side member 54 is connected to the right bracket 327. The right bracket 327 can turn about a right steering axis Y relative to the right side member 54. The right steering axis X extends parallel to the middle steering axis Z of the link supporting portion 212.

Thus, as has been described above, the upper cross member 51, the lower cross member 52, the left side member 53 and the right side member 54 are supported by the link supporting portion 212 so that the upper cross member 51 and the lower cross member 52 are held in postures which are parallel to each other and so that the left side member 53 and the right side member 54 are held in postures which are parallel to each other.

As shown in Figs. 2 and 4, the steering force transmission mechanism 6 includes a middle transmission plate 61, a left transmission plate 62, a right transmission plate 63, a middle joint 64, a left joint 65, a right joint 66, and the tie-rod 67.

The middle transmission plate 61 is connected to a lower portion of the downstream side steering shaft 68. The middle transmission plate 61 cannot turn relative to the downstream side steering shaft 68. The middle transmission plate 61 can turn about the middle steering axis Z relative to the link supporting portion 212.

The left transmission plate 62 is disposed on the left of the middle transmission plate 61. The left transmission plate 62 is connected to the left bracket 317. The left transmission plate 62 cannot turn relative to the left bracket 317. The left transmission plate 62 can turn about the left steering axis X relative to the left side member 53.

The right transmission plate 63 is disposed on the right of the middle transmission plate 61. The right transmission plate 63 is connected to the right bracket 327. The right transmission plate 63 cannot turn relative to the right bracket 327. The right transmission plate 63 can turn about the right steering axis Y relative to the right side member 54.

As shown in Fig. 4, the middle joint 64 is connected to a front portion of the middle transmission plate 61 via a shaft portion that extends in the up-and-down direction of the body frame 21. The middle transmission plate 61 and the middle joint 64 are allowed to turn relative to each other about this shaft portion.

The left joint 65 is disposed directly on the left of the middle joint 64. The left joint 65 is connected to a front portion of the left transmission plate 62 via a shaft that extends in the up-and-down direction of the body frame. The left transmission plate 62 and the left joint 65 are allowed to turn relative to each other about this shaft portion.

The right joint 66 is disposed directly on the right of the middle joint 64. The right joint 66 is connected to a front portion of the right transmission plate 63 via a shaft that extends in the up-and-down direction of the body frame. The right transmission plate 63 and the right joint 66 are allowed to turn relative to each other about this shaft portion.

A shaft portion that extends in the front-and-rear direction of the body frame 21 is provided at a front portion of the middle joint 64. A shaft portion that extends in the front-and-rear direction of the body frame 21 is provided at a front portion of the left joint 65. A shaft portion that extends in the front-and-rear direction of the body frame 21 is provided at a front portion of the right joint 66.

The tie-rod 67 extends in the left-and-right direction of the body frame 21. The tie-rod 67 is connected to the middle joint 64, the left joint 65 and the right joint 66 via those shaft portions. The tie-rod 67 and the middle joint 64 can turn relative to each other about the shaft portion that is provided at the front portion of the middle joint 64. The tie-rod 67 and the left joint 65 can turn relative to each other about the shaft portion that is provided at the front portion of the left joint 65. The tie-rod 67 and the right joint 66 can turn relative to each other about the shaft portion that is provided at the front portion of the right joint 66.

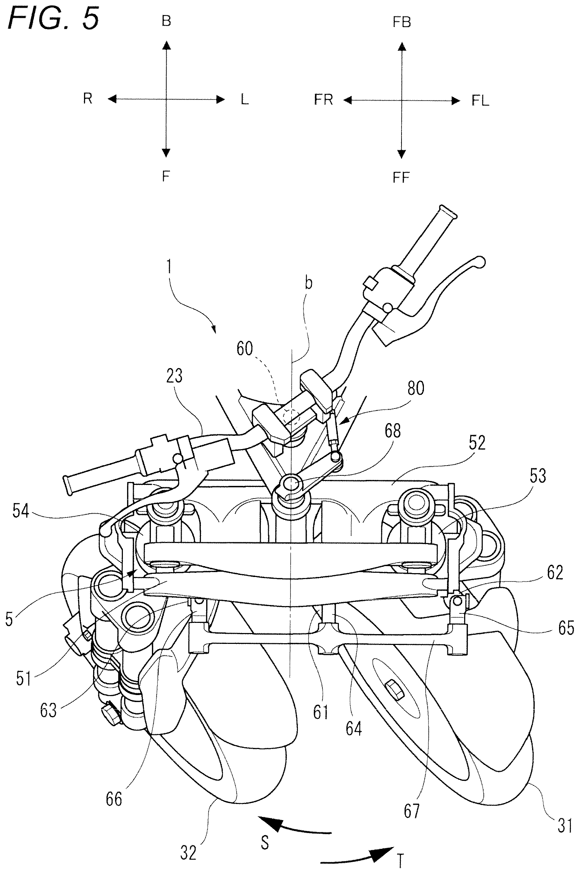

Next, referring to Figs. 4 and 5, a steering operation of the vehicle 1 will be described. Fig. 5 is a plan view, as seen from above the body frame 21, of the front portion of the vehicle 1 in such a state that the left front wheel 31 and the right front wheel 32 are steered or turned to the left.

When the rider operates the handlebar 23, the upstream side steering shaft 60 turns. The turn of the upstream side steering shaft 60 is transmitted to the downstream side steering shaft 68 via the connecting member 80. The downstream side steering shaft 68 turns relative to the link supporting portion 212 about a front steering axis b. In the case of the vehicle 1 being steered to the left as shown in Fig. 5, as the handlebar 23 is operated, the middle transmission plate 61 turns relative to the link supporting portion 212 in a direction indicated by an arrow T about the front steering axis b.

In association with the turning of the middle transmission plate 61 in the direction indicated by the arrow T, the middle joint 64 of the tie-rod 67 turns relative to the middle transmission plate 61 in a direction indicated by an arrow S. This moves the tie-rod 67 leftwards and rearwards while keeping its posture as it is.

As the tie-rod 67 moves leftwards and rearwards, the left joint 65 and the right joint 66 of the tie-rod 67 turn in the direction indicated by the arrow S relative to the left transmission plate 62 and the right transmission plate 63, respectively. This turns the left transmission plate 62 and the right transmission plate 63 in the direction indicated by the arrow T while allowing the tie-rod 67 to keep its posture.

When the left transmission plate 62 turns in the direction indicated by the arrow T, the left bracket 317, which cannot turn relative to the left transmission plate 62, turns in the direction indicated by the arrow T about the left steering axis X relative to the left side member 53.

When the right transmission plate 63 turns in the direction indicated by the arrow T, the right bracket 327, which cannot turn relative to the right transmission plate 63, turns in the direction indicated by the arrow T about the right steering axis Y relative to the right side member 54.

When the left bracket 317 turns in the direction indicated by the arrow T, the left shock absorbing device 33, which is connected to the left bracket 317 via the left front outer tube 333 and the left rear outer tube 335, turns in the direction indicated by the arrow T about the left steering axis X relative to the left side member 53. When the left shock absorbing device 33 turns in the direction indicated by the arrow T, the left front wheel 31, which is supported on the left shock absorbing device 33, turns in the direction indicated by the arrow T about the left steering axis X relative to the left side member 53.

When the right bracket 327 turns in the direction indicated by the arrow T, the right shock absorbing device 34, which is connected to the right bracket 327 via the right front outer tube 343 and the right rear outer tube 345, turns in the direction indicated by the arrow T about the right steering axis Y relative to the right side member 54. When the right shock absorbing device 34 turns in the direction indicated by the arrow T, the right front wheel 32, which is supported on the right shock absorbing device 34, turns in the direction indicated by the arrow T about the right steering axis Y relative to the right side member 54.

When the rider operates the handlebar 23 so as to turn to the right, the elements described above turn in the direction indicated by the arrow S. Since the elements only move the other way around in relation to the left-and-right direction, the detailed description thereof will be omitted here.

Thus, as has been described heretofore, as the rider operates the handlebar 23, the steering force transmission mechanism 6 transmits the steering force accordingly to the left front wheel 31 and the right front wheel 32. The left front wheel 31 and the right front wheel 32 turn about the left steering axis X and the right steering axis Y, respectively, in the direction corresponding to the direction in which the handlebar 23 is operated by the rider.

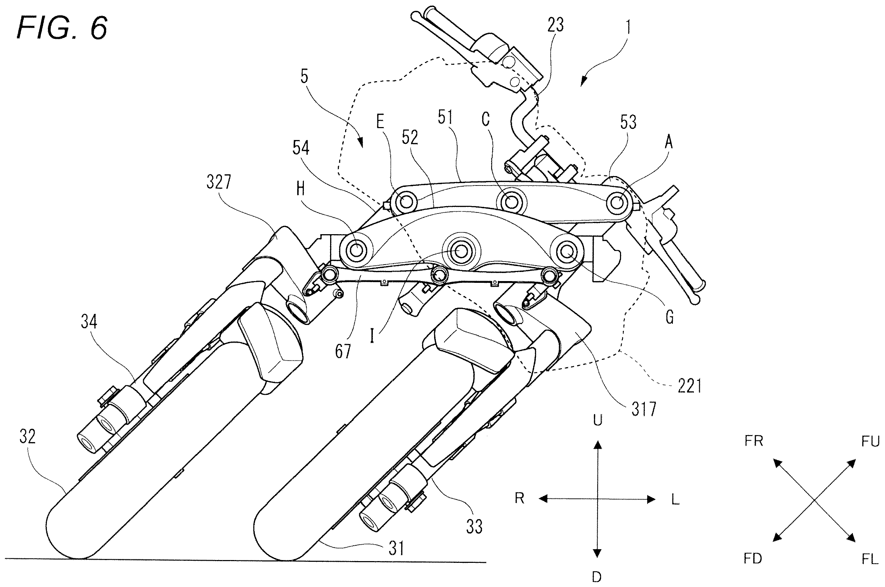

Next, referring to Figs. 2 and 6, a leaning operation of the vehicle 1 will be described. Fig. 6 is a front view of the front portion of the vehicle 1 as viewed from the front of the body frame 21 in such a state that the body frame 21 leans to the left of the vehicle 1. Fig. 6 shows a state as seen through the front cover 221 that is indicated by dashed lines.

As shown in Fig. 2, in such a state that the vehicle 1 is standing upright, when looking at the vehicle 1 from the front of the body frame 21, the link mechanism 5 is having a rectangular shape. As shown in Fig. 6, with the vehicle 1 leaning to the left, when looking at the vehicle 1 from the front of the body frame 21, the link mechanism 5 is having a parallelogram shape.

The deformation of the link mechanism 5 is associated with the leaning of the body frame 21 in the left-and-right direction of the vehicle 1. The operation of the link mechanism 5 means that the upper cross member 51, the lower cross member 52, the left side member 53 and the right side member 54 which make up the link mechanism 5 turn relatively about turning axes which pass through the corresponding connecting portions A, C, E, G, H, I, whereby the shape of the link mechanism 5 changes.

For example, as shown in Fig. 6, when the rider causes the vehicle 1 to lean to the left, the link supporting portion 212 leans to the left from the vertical direction. When the link supporting portion 212 leans, the upper cross member 51 turns counterclockwise as seen from the front of the vehicle 1 about the middle upper axis M that passes through the connecting portion C relative to the link supporting portion 212. Similarly, the lower cross member 52 turns counterclockwise as seen from the front of the vehicle 1 about the middle lower axis that passes through the connecting portion I relative to the link supporting portion 212. This causes the upper cross member 51 to move to the left relative to the lower cross member 52.

As the upper cross member 51 moves to the left, the upper cross member 51 turns counterclockwise as seen from the front of the vehicle 1 about the left upper axis which passes through the connecting portion A and the right upper axis which passes through the connecting portion E relative to the left side member 53 and the right side member 54, respectively. Similarly, the lower cross member 52 turns counterclockwise as seen from the front of the vehicle 1 about the left lower axis which passes through the connecting portion G and the right lower axis which passes through the connecting portion H relative to the left side member 53 and the right side member 54, respectively. This causes the left side member 53 and the right side member 54 to lean to the left from the vertical direction while allowing them to keep their postures that are parallel to the link supporting portion 212.

As this occurs, the lower cross member 52 moves to the left relative to the tie-rod 67. As the lower cross member 52 moves to the left, the shaft portions which are provided at the respective front portions of the middle joint 64, the left joint 65 and the right joint 66 turn relative to the-tie rod 67. This allows the tie-rod 67 to hold a parallel posture to the upper cross member 51 and the lower cross member 52.

As the left side member 53 leans to the left, the left bracket 317 that is connected to the left side member 53 leans to the left. As the left bracket 317 leans to the left, the left shock absorbing device 33 which is connected to the left bracket 317 leans to the left. As the left shock absorbing device 33 leans to the left, the left front wheel 31 that is supported on the left shock absorbing device 33 leans to the left while holding its posture that is parallel to the link supporting portion 212.

As the right side member 54 leans to the left, the right bracket 327 that is connected to the right side member 54 leans to the left. As the right bracket 327 leans to the left, the right shock absorbing device 34 that is connected to the right bracket 327 leans to the left. As the right shock absorbing device 34 leans to the left, the right front wheel 32 that is supported on the right shock absorbing device 34 leans to the left while holding its posture that is parallel to the link supporting portion 212.

The description of the leaning operation of the left front wheel 31 and the right front wheel 32 is based on the vertical direction. However, when the vehicle 1 leans (when the link mechanism 5 is activated to operate), the up-and-down direction of the body frame 21 does not coincide with the vertical up-and-down direction. In the event that the leaning operations are described based on the up-and-down direction of the body frame 21, when the link mechanism 5 is activated to operate, the relative positions of the left front wheel 31 and the right front wheel 32 to the body frame 21 change. In other words, the link mechanism 5 changes the relative positions of the left front wheel 31 and the right front wheel 32 to the body frame 21 in the up-and-down direction of the body frame 21 to thereby cause the body frame 21 to lean relative to the vertical direction.

When the rider causes the vehicle 1 to lean to the right, the elements lean to the right. Since the elements only move the other way around in relation to the left-and-right direction, the detailed description thereof will be omitted here.

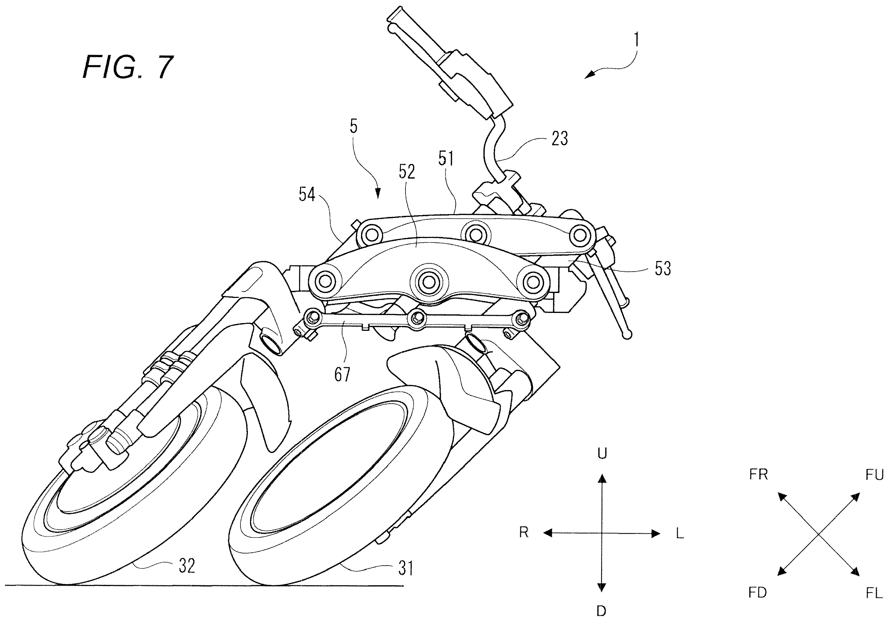

Fig. 7 is a front view of the front portion of the vehicle with the vehicle 1 caused to lean and steered. Fig. 7 shows a state in which the vehicle 1 is steered or turned to the left while being caused to lean to the left. As a result of this steering operation, the left front wheel 31 and the right front wheel 32 are turned to the left, and as a result of the leaning operation, the left front wheel 31 and the right front wheel 32 lean to the left together with the body frame 21. Namely, in this state, the link mechanism 5 exhibits the parallelogram shape, and the tie-rod 67 moves toward the left rear from its position taken when the body frame 21 is in the upright state.

As has been described above, the vehicle 1 according to this embodiment has:
the body frame 21 that can lean to the right of the vehicle 1 when the vehicle 1 turns right and can lean to the left of the vehicle 1 when the vehicle 1 turns left,
the right front wheel 32 and the left front wheel 31 that are provided so as to be aligned side by side in the left-and-right direction of the body frame 21;
the link mechanism 5 that has the upper cross member 51 (an example of a cross member) that turns about the middle upper axis M (an example of a link axis) that extends in the front-and-rear direction of the body frame 21, which supports the right front wheel 32 and the left front wheel 31 so as to be displaced relatively in relation to the up-and-down direction of the body frame 21 with the right front wheel 32 being supported so as to turn about the right steering axis Y that extends in the up-and-down direction of the body frame 21 and the left front wheel 31 being supported so as to turn about the left steering axis X that is parallel to the right steering axis Y; and
the steering force transmission mechanism 6 that is situated between the right steering axis Y and the left steering axis X when seen from the front of the vehicle 1, which has the handlebar 23 (an example of a steering force input portion) that is provided so as to turn about a middle steering axis a (an example of a rear steering axis a) that is parallel to the right steering axis Y and which transmits the steering force inputted into the handlebar 23 to the right front wheel 32 and the left front wheel 31.

### <Details of Steering Force Transmission Mechanism 6>

Next, the steering force transmission mechanism 6 will be described in detail.

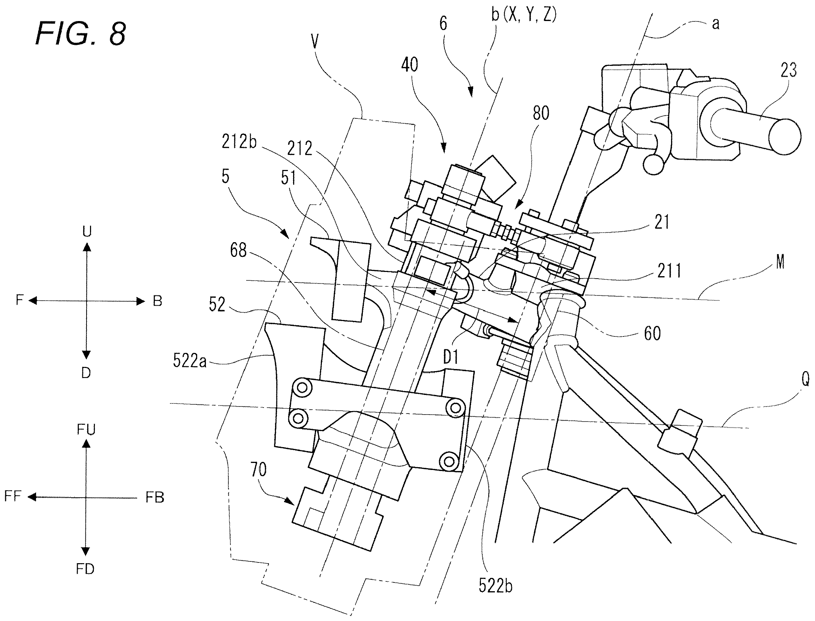

Fig. 8 is a side view showing the steering force transmission mechanism 6. As shown in Fig. 8, the steering force transmission mechanism 6 has the handlebar 23 (the steering force input portion), the upstream side steering shaft 60, the connecting member 80, and the downstream side steering shaft 68. The steering force transmission mechanism 6 transmits a steering force that is inputted into the handlebar 23 to the right front wheel 32 and the left front wheel 31.

The upstream side steering shaft 60 is connected to the handlebar 23. The upstream side steering shaft 60 is supported on the headstock 211 (an example of a first supporting portion) so as to turn about a rear steering axis a that extends in the up-and-down direction of the body frame 21.

An upper portion of the upstream side steering shaft 60 projects above the headstock 211. The handlebar 23 is connected to the portion of the upstream side steering shaft 60 that projects above the headstock 211. The connecting member 80 is connected to the portion of the upstream side steering shaft 60 that projects above the headstock 211. The connecting member 80 is connected to the upstream side steering shaft 60 below the handlebar 23.

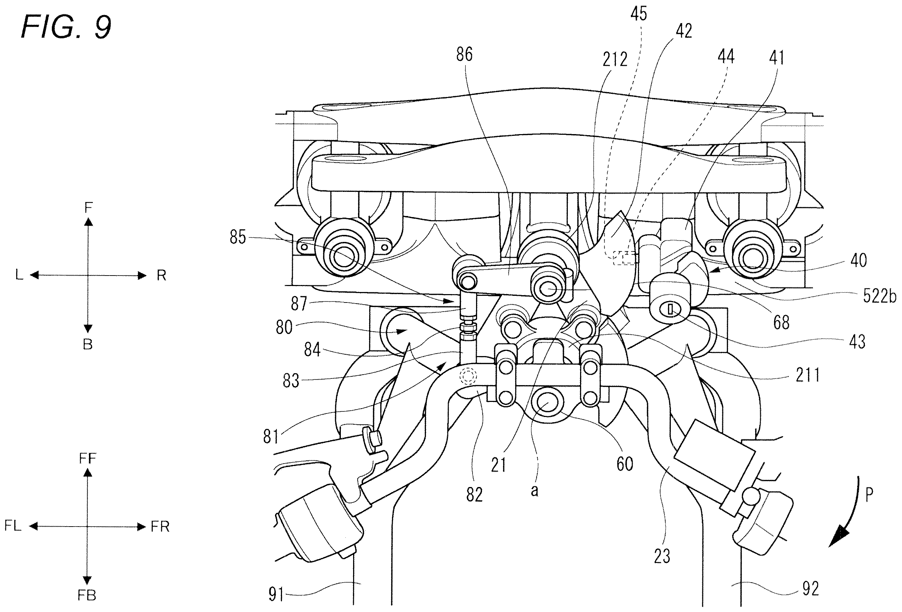

Fig. 9 is a plan view showing the steering force transmission mechanism 6. As shown in Fig. 9, the connecting member 80 is connected to the upstream side steering shaft 60. The connecting member 80 is displaced as the upstream side steering shaft 60 turns.

In this embodiment, the connecting member 80 includes a rear element 81 that is fixed to the upstream side steering shaft 60, a front element 85 that is fixed to the downstream side steering shaft 68, and a bolt member 84 that connects the rear element 81 and the front element 85 together. In this embodiment, the bolt member 84 is provided on the left of the upstream side steering shaft 60 in the left-and-right direction of the body frame 21.

The rear element 81 includes a rear fixing portion 82 that is fixed to the upstream side steering shaft 60 and a rear thread portion 83 that is connected to the rear fixed portion 82 so as to turn about an axis that extends in the up-and-down direction of the body frame 21.

The front element 85 includes a front fixing portion 86 that is fixed to the downstream side steering shaft 68 and a front thread portion 87 that is connected to the front fixing portion 86 so as to turn about an axis that extends in the up-and-down direction of the body frame 21.

A hollow portion is provided on the rear thread portion 83 so as to open to the front, and an female thread portion is provided in an interior of the hollow portion. A hollow portion is also provided on the front thread portion 87 so as to open to the rear, and an female thread portion is provided in an interior of the hollow portion. The bolt member 84 includes male thread portions that are provided at a front portion and a rear portion thereof. The rear portion of the bolt member 84 engages in the rear thread portion 83 of the rear element 81. The front portion of the bolt member 84 engages in the front thread portion 87 of the front element 85. An engaging length of the bolt member 84 into the rear thread portion 83 and an engaging length of the bolt member 84 into the front thread portion 87 are adjusted to thereby adjust an overall length of the connecting member 80 in the front-and-rear direction.

Returning to Fig. 8, the downstream side steering shaft 68 is provided downstream of the upstream side steering shaft 60 in a transmission path of a steering force that is transmitted from the handlebar 23 to the right front wheel 32 and the left front wheel 31. The downstream side steering shaft 68 is connected to the connecting member 80. The downstream side steering shaft 68 can turn about the front steering axis b that extends in the up-and-down direction of the body frame 21 as the connecting member 80 is displaced. In this embodiment, the rear steering axis a and the front steering axis b are parallel to each other.

The downstream side steering shaft 68 is supported on the link supporting portion 212 (a example of a second supporting portion) that is provided ahead of the headstock 211 in the front-and-rear direction of the body frame 21. As described in Figs. 4 and 5, the downstream side steering shaft 68 displaces the tie-rod 67 in the left-and-right direction of the body frame 21 as the upstream side steering shaft 60 turns to thereby turn the right front wheel 32 and the left front wheel 31. In this embodiment, the link supporting portion 212 supports the downstream side steering shaft 68 so as to turn and also supports the upper cross member 51 and the lower cross member 52 so as to turn.

The downstream side steering shaft 68 projects upwards and downwards from the link supporting portion 212. The connecting member 80 is connected to a portion of the downstream side steering shaft 68 that projects upwards from the link supporting portion 212. The middle transmission plate 61 is connected to a portion of the downstream side steering shaft 68 that projects downwards from the link supporting portion 212 to thereby be connected to the tie-rod 67.

### <Operation of Steering Force Transmission Mechanism 6>

Next, by the use of Fig. 9, the operation of the steering force transmission mechanism 6 will be described. When referred to in the following description, clockwise and counterclockwise represent turning directions as seen from the rider.

When the rider turns the handlebar 23 clockwise as indicated by an arrow P, the upstream side steering shaft 60 that is fixed to the handlebar 23 turns clockwise. Then, the connecting member 80 that is fixed to the upstream side steering shaft 60 is displaced to the front.

To describe this in detail, when the rear fixing portion 82 of the rear element 81 of the connecting member 80 is displaced clockwise together with the upstream side steering shaft 60, the rear thread portion 83 is displaced to the front in the front-and-rear direction of the body frame 21. The bolt member 84 and the front thread portion 87 of the front element 85 are displaced to the front in the front-and-rear direction of the body frame 21 as the rear thread portion 83 is displaced so.

When the front thread portion 87 of the front element 85 is displaced to the front, the front fixing portion 86 turns the downstream side steering shaft 68 clockwise. When the downstream side steering shaft 68 turns clockwise, the tie-rod 67 is displaced to the right in the left-and-right direction of the body frame 21.

As has been described above by using Figs. 4 and 5, the tie-rod 67 turns the right front wheel 32 clockwise about the right steering axis Y and turns the left front wheel 31 clockwise about the left steering axis X via the middle transmission plate 61, the right transmission plate 63, the left transmission plate 62, the right bracket 327, the left bracket 317 and the like. This turns the right front wheel 32 and the left front wheel 31 to the right.

### <Steer Lock Mechanism 40>

Next, a steer lock mechanism 40 will be described by the use of Figs. 8 and 9. The steer lock mechanism 40 is a mechanism for locking the right front wheel 32 and the left front wheel 31 so as not to turn. For example, the steer lock mechanism 40 is used to lock the right front wheel 32 and the left front wheel 31 so as not to turn for theft prevention. The steer lock mechanism 40 is a mechanism that makes it impossible for the right front wheel 32 and the left front wheel 31 to turn by reducing the turning range of the right front wheel 32 and the left front wheel 31 to an angle that is smaller than an angle at which the right front wheel 32 and the left front wheel 31 can turn at normal times. In this embodiment, the steer lock mechanism 40 is a so-called cylinder lock type steer lock mechanism 40.

As shown in Figs. 8 and 9, the steer lock mechanism 40 includes a main switch device 41 and a pin receiving portion 42.

The main switch device 41 is fixed to the vehicle body frame 21. The main switch device 41 is provided ahead of the handlebar 23. The main switch device 41 includes a key insertion port 43. The key insertion port 43 opens upwards and rearwards. The main switch device 41 has a pin 44 that can be displaced in the left-and-right direction. The pin 44 is provided so as to project to the left from a left surface of the main switch device 41. The pin 44 can take an advanced position where the pin 44 projects to the left and a withdrawal position where the pin 44 is situated on the right of the advanced position according to the turning angle of a key inserted into the key insertion port 43.

The pin receiving portion 42 is fixed directly or indirectly to the downstream side steering shaft 68. The pin receiving portion 42 is fixed directly or indirectly to an upper portion of the downstream side steering shaft 68. When the downstream side steering shaft 68 turns, the pin receiving portion 42 also turns. In contrast with this, the body frame 21 is kept unrelated in motion from the tuning of the downstream side steering shaft 68 and does not turn. Namely, the main switch device 41 and the pin receiving portion 42 can be displaced relative to each other.

The pin receiving portion 42 includes a pin receiving hole 45. The pin receiving hole 45 is a hole that extends in the left-and-right direction. The pin receiving hole 45 opens to a right surface of the pin receiving portion 42. The pin receiving hole 45 is so sized that the pin 44 of the main switch device 41 can be inserted thereinto. In this embodiment, the pin receiving hole 45 is provided in the pin receiving portion 42 so that with the handlebar 23 turned clockwise through a predetermined angle from a neutral position thereof, the opening of the pin receiving portion 42 faces the pin 44 in a squared fashion.

In such a state that the steer lock mechanism 40 is kept in an in operable state, the steer lock mechanism 40 enables the right front wheel 32 and the left front wheel 31 to be steered or turned. In such a state that the steer lock mechanism 40 is kept in an in operable state, the pin 44 stay in the withdrawal position, and the pin 44 is not inserted into the pin receiving hole 45.

In such a state that the rider turns the handlebar 23 clockwise through the predetermined angle from the neutral position, when the rider turns the key inserted into the key insertion port 43 counterclockwise, for example, the steer lock mechanism 40 is put into an operable state. With the steer lock mechanism 40 kept in the operable state, the right front wheel 32 and the left front wheel 31 cannot be turned.

When the steer lock mechanism 40 is shifted from the inoperable state to the operable state, a cylinder mechanism, not shown, is activated, whereby the pin 44 projects to the left to stay in the advanced position. Then, the pin 44 is inserted into the pin receiving portion 42, whereby the main switch device 41 and the pin receiving portion 42 cannot be displaced relative to each other. Even though the force attempting to turn the downstream side steering shaft 68 is exerted on the downstream side steering shaft 68, the pin 44 is brought into abutment with an inner surface of the pin receiving hole 45, whereby the turning of the downstream side steering shaft 68 is prevented. In this way, the downstream side steering shaft 68 does not turn, and therefore, the tie-rod 67 that is connected to the downstream side steering shaft 68 and the right front wheel 32 and the left front wheel 31 cannot be displaced, and the right front wheel 32 and the left front wheel 31 are not turned. Since the downstream side steering shaft 68 does not turn, the connecting member 80 cannot be displaced, either, whereby the turning of the upstream side steering shaft 60 and the handlebar 23 is prevented.

In this way, the steer lock mechanism 40 includes the main switch device 41 and the pin receiving portion 42 which can be displaced relative to each other and prevents the right front wheel 32 and the left front wheel 31 from being turned by preventing the main switch device 41 from being displaced relative to the pin receiving portion 42.

The pin receiving portion 42 may be provided directly on the downstream side steering shaft 68 or may be provided on a member that is displaced together with the downstream side steering shaft 68 when the downstream side steering shaft 68 turns. Where to provide the main switch device 41 including the pin 44 is not limited to the body frame 21 as long as the relative displacement of the pin receiving portion 42 can be prevented, and thus, the main switch device 41 should be provided on the member that is displaced together with the downstream side steering shaft 68 when the downstream side steering shaft 68 turns. In addition, the mechanism of the steer lock mechanism 40 is not limited to the combination of the pin 44 and the pin receiving hole 45 that prevents the relative displacement of the pin 44 thereto as described above as long as the relative displacement between the pin 44 and the pin receiving hole 45 can be prevented.

On the contrary to the configuration described above, the main switch 41 may be fixed to the downstream side steering shaft 68 and the pin receiving portion 42 may be fixed to the body frame 21.

### <Steer Stopper Mechanism 70>

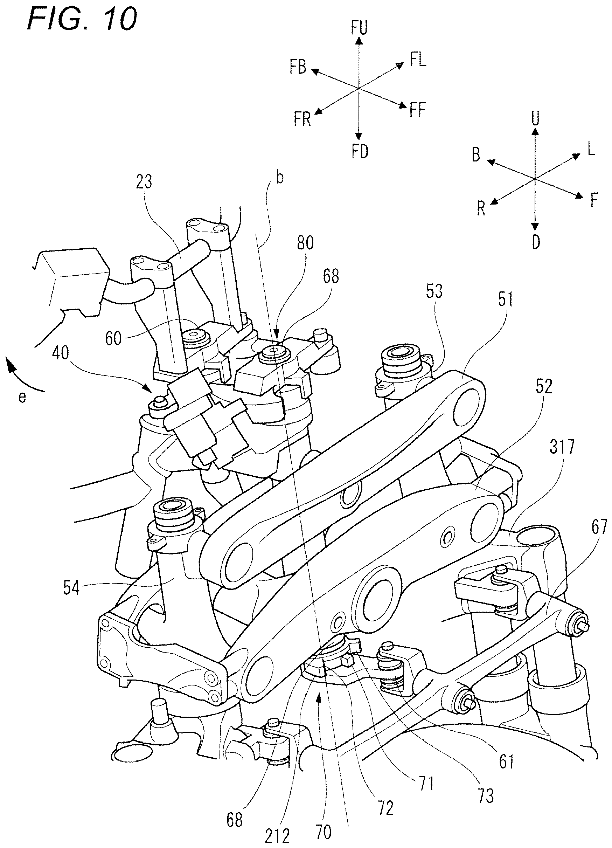

Next, a steer stopper mechanism 70 will be described by the use of Fig. 10. Fig. 10 is a perspective view showing the front portion of the vehicle 1. As shown in Fig. 10, the steer stopper mechanism 70 is provided at a lower portion of the downstream side steering shaft 68.

The steer stopper mechanism 70 is a mechanism for restricting a maximum steering angle of the right front wheel 32 and the left front wheel 31. The maximum steering angle means an angle at which the right front wheel 32 and the left front wheel 31 cannot be turned to any greater angle than the angle even when the rider attempts to turn the right front wheel 32 and the left front wheel 31 further. The maximum steering angle means an angle that is set by a designer of the vehicle 1 with a view to avoiding the interference of constituent members of the vehicle 1 that would be caused as the vehicle 1 is steered.

As shown in Fig. 10, the steer stop mechanism 70 includes a projection 71 that is provided at the lower portion of the downstream side steering shaft 68 and a right abutment wall 72 and a left abutment wall 73 that are provided on the link supporting portion 212.

The projection 71 is provided integrally on a lower end portion of the downstream side steering shaft 68. In the vehicle 1 that is kept not steered at all, the projection 71 projects to the front from the lower end portion of the downstream side steering shaft 68. The right abutment wall 72 is provided directly on the right of the projection 71 and the left abutment wall 71 is provided directly on the left of the projection 71. Since the downstream side steering shaft 68 is supported on the link supporting portion 212 so as to turn, the projection 71 can be displaced relative to the right abutment wall 72 and the left abutment wall 73.

In the event that the right front wheel 32 and the left front wheel 31 are turned through a steering angle that is smaller than the maximum steering angle, the downstream side steering shaft 68 turns relative to the link supporting portion 212 without the projection 71 being brought into abutment with the right abutment wall 72 and the left abutment wail 73.

In contrast with this, when the right front wheel 32 and the left front wheel 31 are turned rightwards to a rightward maximum steering angle, in case the rider attempts to turn the handlebar 23 clockwise as seen from the rider (a direction indicated by an arrow e in Fig. 10) to an angle exceeding that rightward maximum steering angle, the projection 71 attempts to turn about the front steering axis b via the upstream side steering shaft 60, the connecting member 80 and the downstream side steering shaft 68. However, the projection 71 is brought into abutment with the right abutment wall 72, whereby the relative displacement of the projection 71 to the right abutment wall 72 is stopped. This prevents the displacement of the tie-rod 67, whereby the right front wheel 32 and the left front wheel 31 are prevented from being turned to the right through any greater angle than the rightward maximum steering angle.

Similarly, when the right front wheel 32 and the left front wheel 31 are turned leftwards to a leftward maximum steering angle, in case the rider attempts to turn the handlebar 23 counterclockwise as seen from the rider to an angle exceeding that leftward maximum steering angle, the projection 71 is brought into abutment with the left abutment wall 73 to thereby stop any further displacement of the projection 71 relative to the left abutment wall 73. This prevents the displacement of the tie-rod 67, whereby the right front wheel 32 and the left front wheel 31 are prevented from being turned to the left through any greater angle than the leftward maximum steering angle.

In this way, the steer stopper mechanism 70 restricts the maximum steering angle of the right front wheel 32 and the left front wheel 31 by stopping the relative displacement of the projection 71 to the right abutment wall 72 and the left abutment wall 73 so as to prevent the right front wheel 32 and the left front wheel 31 from being steered or turned over the maximum steering angle.

Fig. 8 is a side view of the vehicle 1 that is standing upright and which is kept not steered at all. In the vehicle 1 that is standing upright and which is kept not steered at all, a front steering axis b of the downstream side steering shaft 68 looks like overlapping the left steering axis X, the right steering axis Y and the middle steering axis Z.

In this embodiment, as shown in Fig. 8, when seen from the side of the vehicle 1, a distance (denoted by 0 in the illustrated example) between the downstream side steering shaft 68 (an example of a front shaft member) and the right steering axis Y is smaller than a distance D1 between the upstream side steering shaft 60 (an example of a rear shaft member) and the right steering axis Y. Namely, the downstream side steering shaft 68 is provided in the position that lies nearer to the link mechanism 5 than the upstream side steering shaft 60.

In this embodiment, when seen from the side of the vehicle 1 that is standing upright and which is kept not steered at all, the center axis of the downstream side steering shaft 68 is described as it looking like overlapping the right steering axis Y, however, the invention is not limited to this configuration. For example, when seen from the side of the vehicle 1 that is standing upright and which is kept not steered at all, the center axis of the downstream side steering shaft 68 may deviate slightly to the front or rear of the right steering axis Y.

In addition, at least part of the steer lock mechanism 40 that is mounted on the downstream side steering shaft 68 or the member that turns together with the downstream side steering shaft 68 and the member (the body frame 21) that is displaced relative thereto is provided in a position that overlaps a movable range V of the link mechanism 5 when seen from the side of the vehicle 1.

The movable range V of the link mechanism 5 means a solid that is formed by an outer edge of an imaginary solid that is formed by the passage of the members (the upper cross member 51, the lower cross member 52, the left side member 53 and the right side member 54) that make up the link mechanism 5 when the vehicle 1 is caused to lean from a right maximum banking angle to a left maximum banking angle. A non-movable range formed by a member such as the link supporting portion 212 that is not displaced when the vehicle 1 is caused to lean may be included inside the movable range V of the link mechanism 5.

### (Advantageous Effects)

In the vehicle 1 according to the embodiment, the steering force transmission mechanism 6 that transmits the steering force inputted into the handlebar 23 (an example of a steering force input portion) to the right front wheel 32 and the left front wheel 31 includes the upstream side steering shaft 60 (the example of the rear shaft member) into which the steering force is inputted from the handlebar 23, the downstream side steering shaft 68 (the example of the front shaft member) and the connecting member 80 that connects together the upstream side steering shaft 60 and the downstream side steering shaft 68. Owing to this, compared with the case where the steering force that is inputted into the handlebar is transmitted to the right front wheel 32 and the left front wheel 31 by the single steering shaft, the degree of freedom in designing the arrangement of the handlebar 23 becomes high. Owing to this, the handlebar 23 can be disposed in a position or posture that enables a rider to use the handlebar 23 easily.

Further, the vehicle 1 is prevented from being enlarged in size by the following reason.

The steering force transmission mechanism 6 includes the downstream side steering shaft 68 and the upstream side steering shaft 60. In the target vehicle 1 of this embodiment, when seen from the side of the vehicle 1, the distance between the downstream side steering shaft 68 and the right steering axis Y is smaller than the distance D1 between the upstream side steering shaft 60 and the right steering axis Y. Namely, the upstream side steering shaft 60 is spaced farther away from the link the link mechanism 5 than the downstream side steering shaft 68. Owing to this, it is considered that in case the steer lock mechanism 40 is provided on the circumference of the upstream side steering shaft 60, the interference of the steer lock mechanism 40 with the link mechanism 5 is avoided easily, thereby making it possible to prevent the enlargement in size of the vehicle 1.

In the event that the steer lock mechanism 40 is provided on the circumference of the upstream side steering shaft 60, however, in case the connecting member 80 is broken which connects together the upstream side steering shaft 60 and the downstream side steering shaft 68, even though the upstream side steering shaft 60 is locked, the downstream side steering shaft 68 is allowed to turn, leading to fears that the locked state of the right front wheel 32 and the left front wheel 31 is released. Owing to this, it is necessary that the strength of the connecting member 80 is enhanced so as not to be broken and that the connecting member 80 is protected from an external access attempting gain access to the connecting member 80. The inventor of this invention has noticed that in case the strength of the connecting member 80 is enhanced in the way described above, the connecting member 80 has to be enlarged in size and an additional cover is necessary to protect the connecting member 80, as a result of which an enlargement in size of the vehicle 1 is called for.

Then, the inventor of the invention has studied a challenging provision of the steer lock mechanism 40 on the circumference of the downstream side steering shaft 68. In case the steer lock mechanism 40 is disposed on the circumference of the downstream side steering shaft 68, even though the connecting member 80 is broken, the locked state of the right front wheel 32 and the left front wheel 31 can be maintained. Owing to this, the inventor of the invention has considered that the vehicle 1 can be prevented from being enlarged in size since the necessity is obviated of enhancing the strength of the connecting member 80 or providing the additional cover to prevent the breakage of the connecting member 80.

Firstly, in case the steer lock mechanism 40 is attempted to be disposed on the left or right of the downstream side steering shaft 68 in relation to the left-and-right direction of the body frame 21, since the downstream side steering shaft 68 and the link mechanism 5 are disposed close to each other, the steering lock mechanism 40 is easy to interfere with the link mechanism 5, and hence, it becomes difficult to arrange the steer lock mechanism 40. In order to avoid the interference of the steer lock mechanism 40 with the link mechanism 5, the steer lock mechanism 40 has to be placed in a position that is spaced away from the link mechanism 5 in the left-and-right direction of the body frame 21, which is not realistic.

Then, it is considered that the steer lock mechanism 40 is provided ahead or behind the link mechanism 5 in relation to the front-and-rear direction of the body frame 21 to provide the steer lock mechanism 40 in a position where the interference thereof with the link mechanism 5 is avoided while preventing the enlargement in size of the vehicle 1. Compared with the vehicle in which the steering force transmission mechanism has the single steering shaft, however, the vehicle 1 in which the steering force transmission mechanism 6 has the two shaft members of the downstream side steering shaft 68 and the upstream side steering shaft 60 tends to be easily enlarged in size in the front-and-rear direction of the body frame 21. Owing to this, in case the steer lock mechanism 40 is provided ahead or behind the link mechanism 5 in relation to the front-and-rear direction of the body frame 21, the size of the vehicle 1 is enlarged further in the front-and-rear direction.

Then, the inventor of the invention has considered that at least part of the steer lock mechanism 40 is provided in a position that overlaps the movable range V of the link mechanism 5 when seen from the side of the vehicle 1. The cross members 51, 52 of the link mechanism 5 turn, respectively, about the middle upper axis M and the middle lower axis Q (an example of a link axis) that extend in the front-and-rear direction of the body frame 21. Owing to this, for example, in case at least part of the steer lock mechanism 40 is provided on the circumference of the middle upper axis M of the cross members 51, 52, it becomes difficult for the steer lock mechanism 40 to interfere with the link mechanism 5. The inventor of the invention has found out that the steer lock mechanism 40 can be disposed without interfering with the link mechanism 5 even in the area which overlaps the movable range V of the link mechanism 5 when seen from the side of the vehicle 1 as described above. In addition, by providing the steer lock mechanism 40, in the way described above, so that at least part of the steer lock mechanism 40 overlaps the movable range V of the link mechanism 5 when seen from the side of the vehicle 1, the vehicle 1 is prevented from being enlarged in size in the front-and-rear direction.

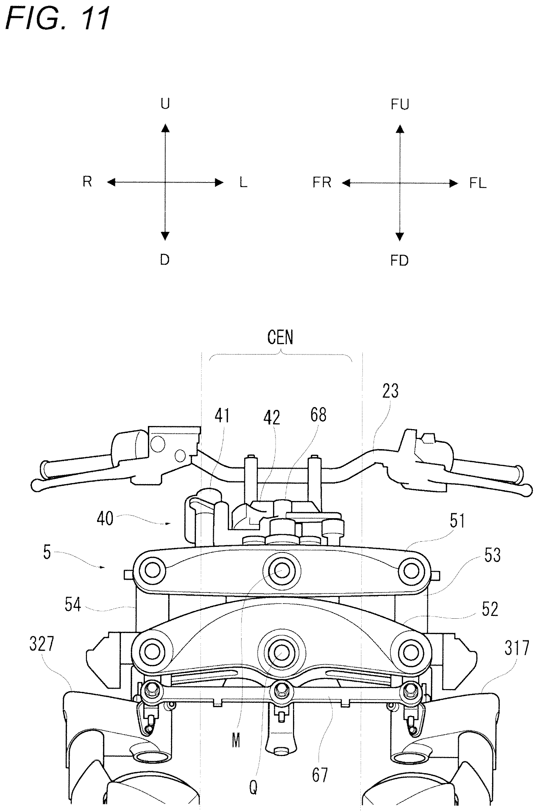

Fig. 11 is a front view of the steering force transmission mechanism 6.
(2) In the vehicle according to the embodiment, as shown in Figs. 9 and 11, when seen from the front of the vehicle 1 that is standing upright, at least part of the steer lock mechanism 40 may be provided above or below the cross members 51, 52. In the illustrated example, at least part of the steer lock mechanism 40 is situated above the upper cross member 51 and the lower cross member 52. When seen from the top of the vehicle 1, as shown in Fig. 9, at least part of the steer lock mechanism 40 overlaps the rear plate member 522b of the lower cross member 52.
   Being different from the invention, in the event that at least part of the steer lock mechanism projects to the left or right of the cross member when seen from the front of the vehicle that is standing upright, the vehicle tends to be enlarged in size in the left-and-right direction. According to the vehicle 1 described under (2), however, since the steer lock mechanism 40 is provided above or below the cross members 51, 52 when seen from the front of the vehicle 1 that is standing upright, it is difficult for the vehicle 1 to be enlarged in size in the left-and-right direction.
(3) In this embodiment, as shown in Fig. 11, when the vehicle 1 is divided into three areas of a right portion, a middle portion CEN and a left portion in the left-and-right direction of the body frame 21 when seen from the front of the vehicle 1 that is standing upright, at least part of the steer lock mechanism 40 is situated in the middle portion CEN. In the illustrated example, at least the pin receiving portion 42 is situated in the middle portion CEN.
   According to the vehicle 1 described under (3), since at least part of the steer lock mechanism 40 is situated in the middle portion CEN, it becomes difficult for the vehicle 1 to be enlarged in size in the left-and-right direction.
   The cross members 51, 52 of the link mechanism 5 turn, respectively, about the middle upper axis M and the middle lower axis Q that extend in the front-and-rear direction of the body frame 21. These middle upper axis M and the middle lower axis Q are situated in the middle portion CEN in the left-and-right direction of the body frame 21, and therefore, in case at least part of the steer lock mechanism 40 is situated in the middle portion CEN in the left-and-right direction of the body frame 21, it becomes difficult for the steer lock mechanism 40 to interfere with the link mechanism 5.
(6) In this embodiment, the steer lock mechanism 40 has the pin receiving portion 42 (an example of a first portion) that is mounted on the downstream side steering shaft 68 or the member that turns together with the downstream side steering shaft 68 and the main switch device 41 (an example of a second portion) that is mounted on the member (the body frame 21) that is displaced relative to the downstream side steering shaft 68 or the member that turns together with the downstream side steering shaft 68.
   The pin receiving portion 42 and the main switch device 41 are brought into abutment with each other to make it impossible for the pin receiving portion 42 to be displaced relative to the main switch device 41, whereby the right front wheel 32 and the left front wheel 31 are made impossible to turn.
   As shown in Fig. 9, the abutment portion (the pin 44 and the pin receiving hole 45) between the pin receiving portion 42 and the main switch device 41 is provided on one side (the right) of the downstream side steering shaft 68 in the left-and-right direction of the body frame 21, and the connecting member 80 is provided on the other side (the left) of the downstream side steering shaft 68 in the left-and-right direction of the body frame 21.
   According to the vehicle 1 configured as described under (6), the abutment portion between the pin receiving portion 42 and the main switch device 41 is disposed on the right of the downstream side steering shaft 68, and the connecting member 80 is disposed on the left of the downstream side steering shaft 68 in relation to the left-and-right direction of the body frame 21. Consequently, it becomes difficult for the abutment portion between the pin receiving portion 42 and the main switch device 41 to interfere with the connecting member 80.
(7) In this embodiment, the steer lock mechanism 40 has the pin receiving portion 42 (the example of the first portion) that is mounted on the downstream side steering shaft 68 or the member that turns together with the downstream side steering shaft 68 and the main switch device 41 (the example of the second portion) that is mounted on the member (the body frame 21) that is displaced relative to the downstream side steering shaft 68 or the member that turns together with the downstream side steering shaft 68. The pin 44 that is activated to operate by the actuator may be provided on one of the pin receiving portion 42 and the main switch device 41, and the pin receiving hole 45 that receives the pin 44 therein may be provided on the other of the pin receiving portion 42 and the main switch device 41. The main switch device 41 may include the actuator that shifts the pin 44 from the advanced position to the withdrawal portion as the key turns. The actuator is activated to operate so as to bring the pin 44 into abutment with the pin receiving hole 45 so as to make it impossible for the pin receiving portion 42 to be displaced relative to the main switch device 41, whereby the right front wheel 32 and the left front wheel 31 are made impossible to turn.
   According to the vehicle 1 configured as described under (7), the pin 44 can be brought into abutment with the pin receiving hole 45 by the actuator, which obviates the necessity of disposing the steer lock mechanism 40 in a position where the rider can easily reach the steer lock mechanism 40 to operate it manually. Owing to this, for example, a configuration may be adopted in which the key insertion port 43 is spaced away from the pin 44 and the actuator while the key insertion port 43 and the actuator are connected by an electric wire and the key insertion port 43 transmits to the actuator an electric signal that signals the actuation of the actuator as the key is turned. As this occurs, being different from the illustrated example, the pin 44 and the actuator can be provided in an interior of the vehicle 1 to which it is difficult to access from the exterior of the vehicle 1, thereby enhancing the degree of freedom in the arrangement of the steer lock mechanism 40.
(8) In this embodiment, as shown in Fig. 8, the front steering axis b and the rear steering axis a are parallel to each other. According to the vehicle 1 configured as described under (8), since the front steering axis b and the rear steering axis a are parallel, the necessity is obviated of using a complex construction for transmitting a steering force from the rear steering axis a to the front steering axis b by changing the turning angle, thereby making it possible to configure the connecting member 80 by using the simple construction.
(9) In this embodiment, as shown in Fig. 8, the steer stopper mechanism 70 that restricts the maximum steering angle of the right front wheel 32 and the left front wheel 31 is mounted on the downstream side steering shaft 68 or the member that turns together with the downstream side steering shaft 68 and the member that is displaced relative to the downstream side steering shaft 68 when the downstream side steering shaft 68 turns, and at least part of the steer stopper mechanism 70 is provided in the position that overlaps the movable range V of the link mechanism 5 when seen from the side of the vehicle 1.
   High rigidity is also required on the steer stopper mechanism 70 and the members on which the steer stopper mechanism 70 is mounted as required on the steer lock mechanism 40 and the members on which the steer lock mechanism 40 is mounted. High rigidity is required on the steer stopper mechanism 70 so as to cope with an external force that is exerted on the right front wheel 32, the left front wheel 31 and the handlebar 23 in an attempt to increase further the steering angle of the right front wheel 32 and the left front wheel 31 in such a state that the right front wheel 32 and the left front wheel 31 are steered to the maximum steering angle. In addition, high rigidity is also required on the member on which the steer stopper mechanism 70 is mounted.
   Then, according to the vehicle 1 of this embodiment, the steer lock device 40 is mounted on the downstream side steering shaft 68 or the member that turns together with the downstream side steering shaft 68 and the member that is displaced relative to the downstream side steering shaft 68, and both the members have the high rigidity. Since the steer stopper mechanism 70 is mounted on these members having the high rigidity, the supporting rigidity of the steer stopper mechanism 70 is enhanced.
(11) In this embodiment, the downstream side steering shaft 68 on which the steer lock mechanism 40 is provided may be thicker than the upstream side steering shaft 60. According to the vehicle 1 configured as described under (11), the steer lock mechanism 40 can be supported with high rigidity by using the downstream side steering shaft 68 having the high rigidity.
(12) In this embodiment, the link mechanism 5 has the right side member 54 that supports the right front wheel 32 so as to turn about the right steering axis Y that extends in the up-and-down direction of the body frame 21 and the left side member 53 that supports the left front wheel 31 so as to turn about the left steering axis X that is parallel to the right steering axis Y.
   The cross member 51, 52 has the upper cross member 51 that supports the upper portion of the right side member 54 at the right end portion thereof so as to allow the upper portion to turn about the right upper axis that extends in the front-and-rear direction of the body frame 21, which supports the upper portion of the left side member 53 at the left end portion thereof so as to allow the upper portion to turn about the left upper axis that is parallel to the right upper axis and which is supported on the body frame 21 at the middle portion thereof so as to turn about the middle upper axis M that is parallel to the right upper axis, and the lower cross member 52 that supports the lower portion of the right side member 54 at the right end portion thereof so as to allow the lower portion to turn about the right lower axis that extends in the front-and-rear direction of the body frame 21, which supports the lower portion of the left side member 53 at the left end portion thereof so as to allow the lower portion to turn about the left lower axis that is parallel to the right upper axis and which is supported on the body frame 21 at the middle portion thereof so as to turn about the middle lower axis Q that is parallel to the right upper axis.
   As shown in Fig. 8, the downstream side steering shaft 68 on which the steer lock mechanism 40 is provided is longer than the distance between the middle upper axis M and the middle lower axis Q.
   According to the vehicle 1 configured as described under (12), the steer lock mechanism 40 can be provided at any location along the length of the long downstream side steering shaft 68. For example, the steer lock mechanism 40 can be provided at an upper end of the downstream side steering shaft 68 (above the upper cross member 51) as shown in the figure, or at a middle portion of the downstream side steering shaft 68 in relation to an up-and-down direction thereof (for example, between the upper cross member 51 and the lower cross member 52), or at a lower end portion of the downstream side steering shaft (below the lower cross member 52). In this way, since the degree of freedom in selecting the location whereto place the steer lock mechanism 40 is high, the steer lock mechanism 40 can be provided, for example, the location where it becomes difficult for the steer lock mechanism 40 to interfere with the other members.
(13) In this embodiment, as shown in Fig. 8, the downstream side steering shaft 68 on which the steer lock mechanism 40 is provided may be thicker than an upper end portion of the right side member 54 or an upper end portion of the left side member 53. According to the vehicle 1 configured as described under (13), it is easy to ensure the rigidity of the downstream side steering shaft 68.
(14) In this embodiment, as shown in Fig. 8, the downstream side steering shaft 68 on which the steer lock mechanism 40 is provided may be longer than the right side member 54 or the left side member 53.
   According to the vehicle 1 configured as described under (14), the steer lock mechanism 40 can be provided at any location along the length of the long downstream side steering shaft 68. The degree of freedom in selecting the location where to place the steer lock mechanism 40 is enhanced. Since the degree of freedom in selecting the location where to place the steer lock mechanism 40 is high, for example, the steer lock mechanism 40 can be provided at the location where it becomes difficult for the steer lock mechanism 40 to interfere with the other members.
(15) In the vehicle 1 according to the embodiment, as shown in Figs. 2 and 8, the cross member has the upper cross member 51 and the lower cross member 52 that is provided below the upper cross member 51, and the body frame 21 has the upper supporting portion C that supports the upper cross member 51 so as to turn and the lower supporting portion l that supports the lower cross member 52 so as to turn. As shown in Fig. 2, the front shaft member 68 may penetrate the body frame 21 (the link supporting portion 212) so that the front shaft member (the downstream side steering shaft 68) passes the upper supporting portion C and the lower supporting portion l when seen from the front of the vehicle 1.
   According to the vehicle 1 configured as described under (15), part (the link supporting portion 212) of the body frame 21 where the upper supporting portion C and the lower supporting portion l are provided is given enhanced rigidity in order to support the upper cross member 51 and the lower cross member 52 with high rigidity. The downstream side steering shaft 68 is provided so as to penetrate the link supporting portion 212 (part of the body frame) whose rigidity is so enhanced, and therefore, the vehicle 1 can be configured compact in size while avoiding the interference of the link mechanism 5 with the steering force transmission mechanism 6.
   In particular, in the event that the part (the link supporting portion 212) of the body frame where the upper supporting portion C and the lower supporting portion I are provided is made up of the pipe-shaped member, the link supporting portion 212 can be configured highly rigid and light in weight. In case the downstream side steering shaft 68 is caused to penetrate the interior of the pipe-shaped link supporting portion 212, the vehicle 1 can be configured compact in size while avoiding the interference of the link mechanism 5 with the steering force transmission mechanism 6.
(16) In the vehicle 1 according to the embodiment, as shown in Fig. 8, the body frame 21 may have the link supporting portion 212 that supports the cross member (the upper cross member 51 and the lower cross member 52) so as to turn, the lower cross member 52 may have the front cross element (the front plate member 522a) that is situated ahead of the link supporting portion 212 and the rear cross element (the rear plate member 522b) that is situated behind the link supporting portion 212, and
   the front steering axis b of the front shaft member (the downstream side steering shaft 68) may be situated between the front end of the front plate element 522a and the rear end of the rear plate member 522b.
   According to the vehicle 1 configured as described under (16), when the link mechanism 5 is activated to operate, the front plate member 522a and the rear plate member 522b turn about the link axes (the middle upper axis M and the middle lower axis Q) that extend in the front-and-rear direction of the body frame 21. Consequently, even though the downstream side steering shaft 68 is provided between the front plate member 522a and the rear plate member 522b, the downstream side steering shaft 68 does not interfere with the front plate member 522a and the rear plate member 522b when the link mechanism 5 is activated to operate. Thus, the vehicle 1 can be configured compact in size while preventing the interference.
(17) In the vehicle 1 according to the embodiment, as shown in Figs. 8 and 9, the body frame 21 may have the pipe-shaped link supporting portion 212 that supports the cross member (the upper cross member 51 and the lower cross member 52) so as to turn, the front shaft member (the downstream side steering shaft 68) may be provided coaxially with the pipe-shaped link supporting portion 212, and at least part of the downstream side steering shaft 68 may be inserted into the interior of the pipe-shaped link supporting portion 212.

According to the vehicle 1 configured as described under (17), the link supporting portion 212 that supports the upper cross member51 and the lower cross member 52 so as to turn is made up of the pipe-shaped member, and therefore, the link supporting portion 212 can be configured highly rigid and light in weight. At least part of the downstream side steering shaft 68 is inserted into the interior of the pipe-shaped link supporting portion 212, and therefore, the vehicle 1 can be configured compact in size while configuring the link supporting portion 212 highly rigid and light in weight and avoiding the interference of the link mechanism 5 with the steering force transmission mechanism 6.

Further, in this embodiment, as shown in Fig. 8, the front plate member 522a of the lower cross member 52 is supported at the front portion of the link supporting portion 212 so as to turn. The rear plate member 522b of the lower cross member 52 is supported at the rear portion of the link supporting portion 212 so as to turn. Since the front plate member 522a and the rear plate member 522b are supported by the single link supporting portion 212, compared with a case where a member that supports the front plate member 522a and a member that supports the rear plate member 522b are prepared separately, the number of parts can be reduced.

In this embodiment, as shown in Fig. 2, when seen from the front of the vehicle 1 that is standing upright and which is kept not steered at all, the lower end of the lower cross member 52 is situated above the upper end of the right front wheel 32 and the upper end of the left front wheel 31.

In addition, as shown in Fig. 4, when seen from the top of the vehicle 1 that is standing upright and which is kept not steered at all along the front steering axis a, at least part of the right front wheel 32 and at least part of the left front wheel 31 may overlap the lower cross member 52.

These configurations can provide the vehicle 1 which is compact in the left-and-right direction.

As shown in Fig. 8, at least part of the rear cross element 522b of the lower cross member 52 may be situated between the front steering axis b and the rear steering axis a. The rear plate member 522b can be disposed by making use of the space defined between the front steering axis b and the rear steering axis a, and therefore, the vehicle 1 can be configured compact in size.

In this embodiment, as shown in Fig. 9, the body frame 21 has the right frame 92 and the left frame 91 that is provided on the left of the right frame 92, the link supporting portion 212 (an example of a front shaft supporting portion) that supports the downstream side steering shaft 68 so as to turn is supported by the right frame 92 and the left frame 91, and the headstock 211 (an example of a rear shaft supporting portion) that supports the upstream side steering shaft 60 so as to turn is provided on the right frame 92 and the left frame 91 behind the connecting portion that connects the right frame 92 and the left frame 91 with the link supporting portion 212 in the front-and-rear direction of the body frame 21.

According to the vehicle 1 configured as described under, the headstock 211 is supported by the right frame 92 and the left frame 91 , and therefore, the headstock 211 is supported with high rigidity in the left-and-right direction.

The right frame 92 and the left frame 91 are preferably frames that support the engine unit 25 as shown in Fig. 1. Particularly high rigidity is required on the portion of the body frame 21 which supports the engine unit 25. Then, it is preferable that the headstock 211 is supported by using the right frame 92 and the left frame 91 whose rigidity is enhanced to support the engine unit 25.

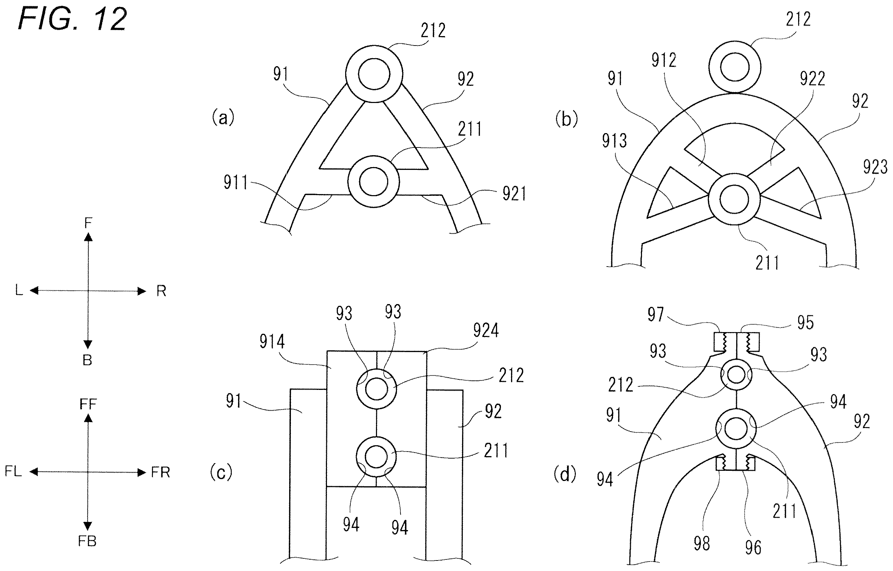

The right frame 92 and the left frame 91 are not limited to those shown in Fig. 9. Fig. 12 is a plan view showing schematically the link supporting portion 212, the headstock 211, the right frame 92, and the left frame 91. The right frame 92 and the left frame 91 may be configured as shown in Fig. 12.

In a configuration shown in Fig. 12A, the link supporting portion 212 is supported by a front end of a right frame 92 and a front end of a left frame 91. A right rear portion of the link supporting portion 212 is supported by the front end of the right frame 92. A left rear portion of the link supporting portion 212 is supported by the front end of the left frame 91.

The headstock 211 is supported by a right middle frame 921 that extends to the left from the right frame 92 and a left middle frame 911 that extends to the right from the left frame 91 behind the link supporting portion 212 in the front-and-rear direction of the body frame 21. A right portion of the headstock 211 is supported by a left end of the right middle frame 921. A left portion of the headstock 211 is supported by a right portion of the left middle frame 911.

In a construction shown in Fig. 12B, a right frame 92 and a left frame 91 are integrated into one unit at front ends thereof. The link supporting portion 212 is supported at a front end of the right frame 92 and the left frame 91 integrated. A rear end portion of the link supporting portion 212 is supported at the front end of the right frame 92 and the left frame 91 integrated.

The headstock 211 is supported, behind the link supporting portion 212, by a first right middle frame 922 that extends to the left from the right frame 92, a second right middle frame 923 that extends to the left from the right frame 92 behind the first right middle frame 922, a first left middle frame 912 that extends to the right from the left frame 91 and a second left middle frame 913 that extends to the right from the left frame 91 behind the first left middle frame 912.

A right front portion of the headstock 211 is supported by the first right middle frame 922, and a right rear portion of the headstock 211 is supported by the second right middle frame 923. A left front portion of the headstock 211 is supported by the first left middle frame 912, and a left rear portion of the headstock 211 is supported by the second left middle frame 913.

In a construction shown in Fig. 12C, a substantially rectangular parallelepiped right bock body 924 is fixed to a left front portion of a right frame 92. A substantially rectangular parallelepiped left block body 914 is fixed to a right front portion of a left frame 91. The right block body 924 and the left block body 914 are connected together.

First recess portions 93 and second recess portions 94 that are situated behind the first recess portions 93 are provided on surfaces of the right block body 924 and the left block body 914 that face each other. The first recess portion 93 on the right block body 924 and the first recess portion 93 on the left block body 914 form a hole portion into which the link supporting portion 212 is fixedly inserted. The second recess portion 94 on the right block body 924 and the second recess portion 94 on the left block body 914 form a hole portion into which the headstock 211 is fixedly inserted.

In this configuration, in place of the substantially rectangular parallelepiped block bodies, plate members may be used.

In a construction shown in Fig. 12D, front tightening portions 95 that protrude to the front are provided individually at front ends of surfaces of front portions of a right frame 92 and a left frame 91 which face each other. Rear tightening portions 96 that protrude to the rear are provided individually at rear ends of the surfaces of front portions of the right frame 92 and the left frame 91 which face each other.

By matching the right frame 92 and the left frame 91 face to face together, a front end portion of the right frame 92 and a front end portion of the left frame 91 form a single front tightening portion 95, and a rear end portion of the right frame 92 and a rear end portion of the left frame 91 form a single rear tightening portion 96. A nut member 97 is tightened on to the front tightening portion 95 so formed, and a nut member 98 is tightened on to the rear tightening portion 96, whereby the right frame 92 and the left frame 91 are fixed together strongly and rigidly.
the first recess portions 93 and the second recess portions 94 that are situated behind the first recess portions 93 are provided on the surfaces of the front portion of the right frame 92 and the front portion of the left frame 91 that face each other. The first recess portion 93 on the right frame 92 and the first recess portion 93 of the left frame 91 form the hole portion into which the link supporting portion 212 is fixedly inserted. The second recess portion 94 on the right frame 92 and the second recess portion 94 of the left frame 91 form the hole portion into which the headstock 211 is fixedly inserted.

By setting a diameter of the hole portion that are formed by the first recess portions 93 to be slightly smaller than an outside diameter of the link supporting portion 212, the link supporting portion 212 can be supported strongly and rigidly by the right frame 92 and the left frame 91 in a simple fashion by tightening the front tightening portion 95 and the rear tightening portion 96 by the nut members 97, 98, respectively.

Alternatively, by setting a diameter of the hole portion that are formed by the second recess portions 94 to be slightly smaller than an outside diameter of the headstock 211, the headstock 211 can be supported strongly and rigidly in a simple fashion by the right frame 92 and the left frame 91 by tightening the front tightening portion 95 and the rear tightening portion 96 by the nut members 97, 98, respectively.

In this embodiment, as shown in Fig. 8, the body frame 21 has the link supporting portion 212 (the example of the front support portion) having the pivotably support portion 212b that supports the cross members 51, 52 so as to turn, and the downstream side steering shaft 68 penetrates the link supporting portion 212.

In this embodiment, the pivotable support portion 212b is a shaft portion that projects to the front or rear from the link supporting portion 212. This pivotable support portion 212b is integrated with the link supporting portion 212. The plate member 512 of the upper cross member 51 is supported by the pivotable support portion 212b that project to the front from the link supporting portion 212 so as to turn. The front plate member 522a of the lower cross member 52 is supported so as to turn by the pivotable support portion 212b that projects to the front from the link supporting portion 212, and the rear plate member 522b is supported so as to turn by the pivotable support portion 212b that projects to the rear from the link supporting portion 212.

According to the vehicle 1 configured as described above, the following advantageous effect can be provided.

Since the link supporting portion 212 supports both the cross members 51, 52 and the downstream side steering shaft 68 whose turning axes differ from each other, the two members can be supported by the single member, thereby making it possible to increase the number of parts involved. This can restrict the enlargement in size of the vehicle 1.

According to the vehicle 1 configured as described above, the following advantageous effect can be provided.

Since high rigidity is required on the member to which the upper cross member 51 and the lower cross member 52 are attached, the rigidity of the member is set high. In order to ensure high rigidity with a small amount of material, it is desirable to adopt a cylindrical shape. Then, in the vehicle 1 according to this embodiment, the downstream side steering shaft 68 is inserted through the interior of the member that supports the upper cross member 51 and the lower cross member 52, and therefore, the utilization efficiency of the space is enhanced. In addition, the member that supports the upper cross member 51 and the lower cross member 52 and the member that supports the downstream side steering shaft 68 so as to turn are made commonable, and therefore, the number of parts can be reduced.

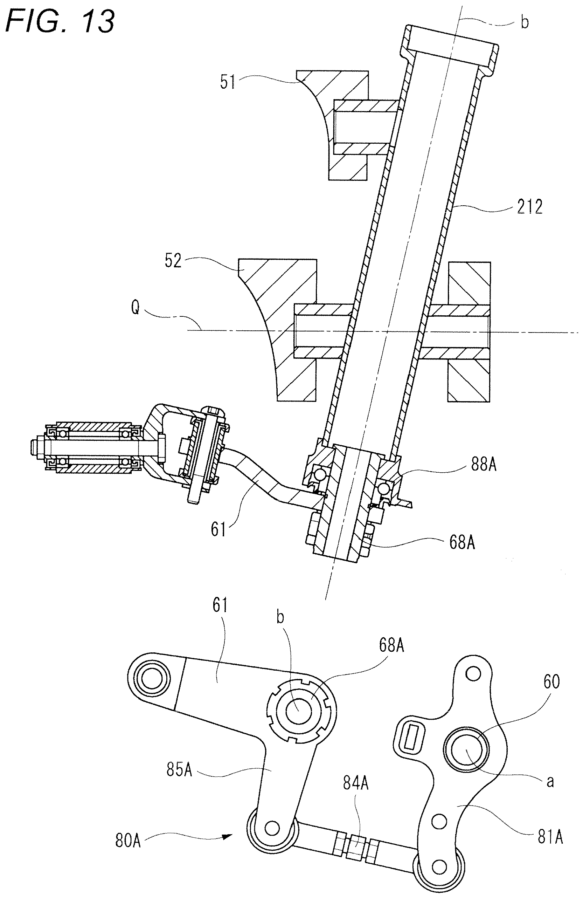

In this embodiment, while the downstream side steering shaft 68 is described as penetrating the cylindrical link supporting portion 212, the invention is not limited thereto. Fig. 13 is a side view showing a link supporting portion 212 and a downstream side steering shaft 68 according to Modified Example 1 of the invention.

As shown in Fig. 13, in Modified Example 1, a downstream side steering shaft 68A is provided coaxially with a pipe-shaped link supporting portion 212 at a lower portion of the link supporting portion 212. The downstream side steering shaft 68A is supported by the link supporting portion 212 so as to turn. An outer circumferential surface of the downstream side steering shaft 68A is supported on an inner circumferential surface of a lower end of the pipe-shaped link supporting portion 212 via a bearing 88A. A front element 85A of a connecting member 80A is fixed to the downstream side steering shaft 68A so as not to turn. The front element 85A is integrated with the middle transmission plate 61.

A rear element 81A of the connecting member 80A is fixed to a lower end of the upstream side steering shaft 60 so as not to turn. This rear element 81A is connected to the front element 85A via a bolt member 84A.

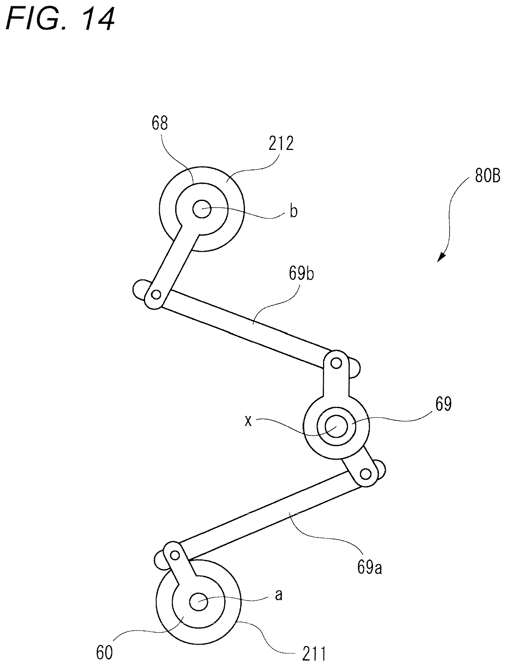

(4) Fig. 14 is a schematic top view of a connecting member 80B of a vehicle 1 according to Modified Example 2 of the invention. As shown in Fig. 14, at least one middle shaft member 69 is provided between the downstream side steering shaft 68 and the upstream side steering shaft 60. The connecting member 80B may be a iink that is connected to the downstream side steering shaft 68 or the upstream side connecting shaft 60 via a turning axis x that is different from the front steering axis b and the rear steering axis a so as to turn and which is displaced as the upstream side steering shaft 60 turns to thereby turn the downstream side steering shaft 68. The connecting member 80B shown includes the middle shaft member 69, a first link member 69a and a second link member 69b.

The turn of the upstream side steering shaft 60 is transmitted to the middle shaft member 69 via the first link member 69a. The turn of the middle shaft member 69 is transmitted to the downstream side steering shaft 68 via the second link member 69b. In this way, the steering force transmitted to the upstream side steering shaft 60 is transmitted to the downstream side steering shaft 68 via the middle shaft member 69. In this way, the connecting member 80B may be configured so as to transmit the turn of the upstream side steering shaft 60 to the downstream side steering shaft 68 by the mechanism including one or more shafts.

According to the vehicle 1 of Modified Example 2 configured in the way described above, the connecting member 80B is easy to be configured and the degree of freedom in designing the steering force transmission mechanism 6 is high, and therefore, the usability of the handlebar 23 by the rider can be enhanced further.

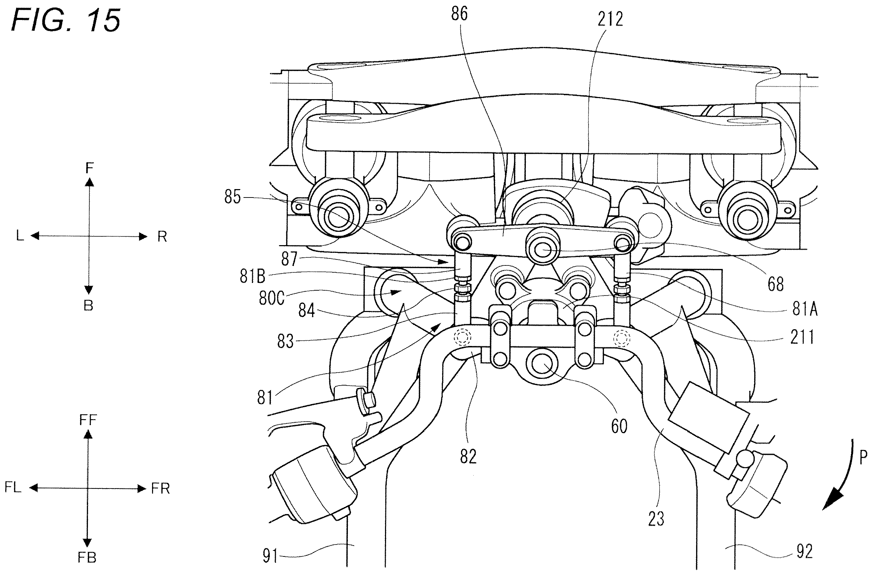

(5) Fig. 15 is a schematic top view of a connecting member 80C of a vehicle according to Modified Example 3 of the invention. As shown in Fig. 15, in this modified example, the connecting member 80C has a right element 81A that is provided on the right of the downstream side steering shaft 68 in relation to the left-and-right direction of the body frame 21 so as to connect together the downstream side steering shaft 68 and the upstream side steering shaft 60 and a left element 81B that is provided on the left of the downstream side steering shaft 68 in relation to the left-and-right direction of the body frame 21 so as to connect together the downstream side steering shaft 68 and the upstream side steering shaft 60.

According to the vehicle of this modified example, compared with a case where the connecting member 80 is made up of the single element to connect together the downstream side steering shaft 68 and the upstream side connecting shaft 60, the rigidity of the connecting member 80C is easy to be enhanced.

As the connecting members 80, 80A, 80B, 80C, a link construction, a construction using a pillow ball, a rolling bearing or a sliding bearing at an end portion of the link construction or a construction that uses a gear, a chain, a belt, a worm gear or a propeller shaft may be used to transmit the turn of the upstream side steering shaft 60 to the downstream side steering shaft 68. Alternatively, as in the embodiment that has been described above, a construction having the length adjusting function may be adopted as the connecting members 80, 80A, 80B, 80C.

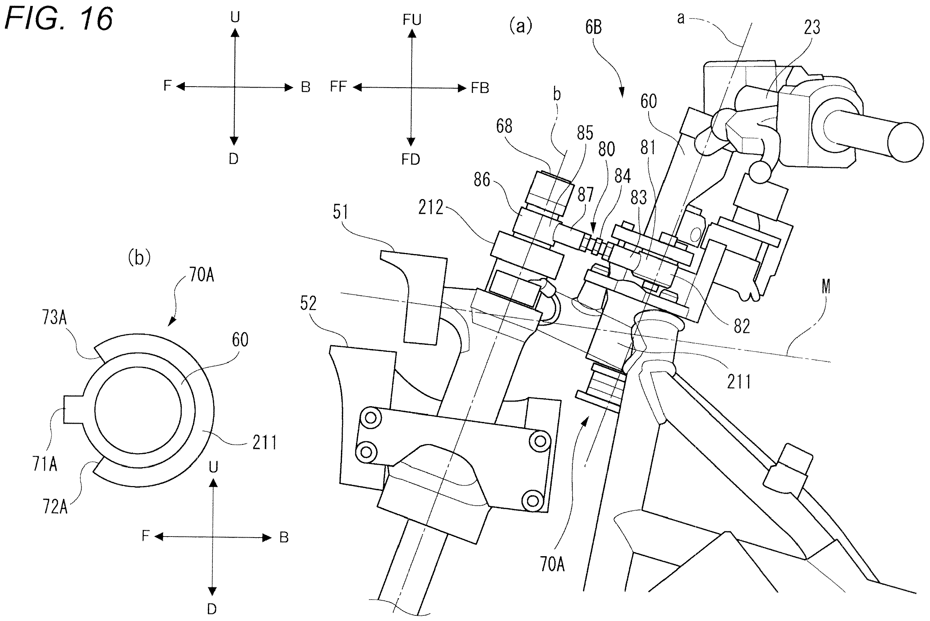

(10) Fig. 16 is a view showing a steering force transmission mechanism 6B of a vehicle according to Modified Example 4 of the invention. Fig. 16A is a side view, and Fig. 16B is a bottom view of the upstream side steering shaft 60.

As shown in Fig. 16, a steer stopper mechanism 70A that restricts the maximum steering angle of the right front wheel 32 and the left front wheel 31 may be mounted on the upstream side steering shaft 60 or the member that turns together with the upstream side steering shaft 60 and the member (for example, the body frame 21) that is displaced relative to the upstream side steering shaft 60 when the upstream side steering shaft 60 turns.

In the illustrated example, a projection 71A is provided at a lower end of the upstream side steering shaft 60. The projection 71A projects radially outwards from the upstream side steering shaft 60. A right abutment portion 72A and a left abutment portion 73A are provided at a lower end of the headstock 211 that supports the upstream side steering shaft 60 so as to turn. The projection 71A is brought into abutment with the right abutment portion 72A when the right front wheel 32 and the left front wheel 31 are steered to the right to a rightward maximum steering angle. The projection 71A is brought into abutment with the left abutment portion 73A when the right front wheel 32 and the left front wheel 31 are steered to the left to a leftward maximum steering angle. The steer stopper mechanism 70A prevents the right front wheel 32 and the left front wheel 31 from being steered through an angle that exceeds the maximum steering angle by using the configuration described above.

According to the vehicle of this modified example, compared with the embodiment described above, the steer stopper mechanism 70A is easy to be provided in the position that is spaced farther away from the link mechanism 5 so as to make it difficult for the steer stopper mechanism 70A to interfere with the link mechanism 5, and therefore, it becomes difficult for the vehicle to be enlarged in size.

In this embodiment, the left shock absorbing device 33 and the right shock absorbing device 34 each include the pair of telescopic mechanisms. However, depending upon the specification of the vehicle 1, the number of telescopic mechanisms that the left shock absorbing device 33 and the right shock absorbing device 34 include individually may be one.

In this embodiment, in the left shock absorbing device 33, the left outer tube is described as being situated above the left inner tube and the left front wheel 31 is described as being supported rotatably at the lower portion of the left inner tube, and in the right shock absorbing device 34, the right outer tube is described as being situated above the right inner tube and the right front wheel 32 is described as being supported rotatably at the lower portion of the right inner tube, however, the invention is not limited to this configuration. In the left shock absorbing device, the left inner tube may be situated above the left outer tube and the left front wheel may be supported rotatably at the lower portion of the left outer tube, and in the right shock absorbing device, the right inner tube may be situated above the right outer tube and the right front wheel may be supported rotatably at the lower portion of the right outer tube.

In these embodiments, while the left shock absorbing device 33 is described as being positioned on the left side of the left front wheel 31, and the right shock absorbing device 34 is described as being positioned on the right side of the right front wheel 32, the invention is not limited thereto. The left shock absorbing device 33 may be situated on the right of the left front wheel 31, and the right shock absorbing device 34 may be situated on the left of the right front wheel 32.

In the embodiments, while the engine unit 25 is described as supporting the rear wheel 4 so as to oscillate, the invention is not iimited thereto. The engine unit and the rear wheel may be both supported on the body frame so as to oscillate.

In the above embodiment, the vehicle 1 includes the single rear wheel 4. However, the vehicle 1 may include a plurality of rear wheels.

In the embodiments, the center of the rear wheel 4 in the left-and-right direction of the body frame 21 coincides with the center of the space defined between the left front wheel 31 and the right front wheel 32 in the left-and-right direction of the body frame 21. Although the configuration described above is preferable, the center of the rear wheel 4 in the left-and-right direction of the body frame 21 does not have to coincide with the center of the space defined between the left front wheel 31 and the right front wheel 32 in the left-and-right direction of the body frame 21.

In the embodiments, the link mechanism 5 includes the upper cross member 51 and the lower cross member 52. However, the link mechanism 5 may include a cross member other than the upper cross member 51 and the lower cross member 52. The "upper cross member" and the "lower cross member" are merely so called based on their relative positions in relation to the up-and-down direction. The upper cross member does not mean an uppermost cross member in the link mechanism 5. The upper cross member means a cross member that lies above another cross member that lies therebelow. The lower cross member does not mean a lowermost cross member in the link mechanism 5. The lower cross member means a cross member that lies below another cross member that lies thereabove. At least one of the upper cross member 51 and the lower cross member 52 may be made up of two parts such as a right cross member and a left cross member. In this way, the upper cross member 51 and the lower cross member 52 may be made up of a plurality of cross members as long as they maintain the link function.

In the embodiments, the link mechanism 5 constitutes the parallel four joint link system. However, the link mechanism 5 may adopt a double wishbone configuration.

When used in this description, the word "parallel" means that it also includes two straight lines which do not intersect each other as members while they are inclined at an angle falling within the range of ± 40 degrees. When used in this description to describe a direction or a member, the expression reading "something extends along a certain direction or member" means that it includes a case where something inclines at an angle falling within the range of ± 40 degrees relative to the certain direction or member. When used in this description, the expression reading "something extends in a direction" means that it includes a case where something extends in the direction while being inclined at an angle falling within the range of ± 40 degrees relative to the direction.

### [Description of Reference Numerals and Character]

- 1: vehicle
- 2: vehicle main body portion
- 3: front wheel
- 4: rear wheel
- 5: link mechanism
- 6: steering force transmission mechanism
- 21: body frame
- 22: body cover
- 23: handlebar (an example of a steering force input portion)
- 24: seat
- 25: engine unit
- 31: left front wheel
- 32: right front wheel
- 33: left shock absorbing device
- 34: right shock absorbing device
- 40: steer lock mechanism
- 41: main switch device (an example of a second portion)
- 42: pin receiving portion (an example of a first portion)
- 43: key insertion port
- 44: pin
- 45: pin receiving hole
- 51: upper cross member (an example of a cross member)
- 52: lower cross member (an example of a cross member)
- 53: left side member
- 54: right side member
- 60: upstream side steering shaft (an example of a rear shaft member)
- 61: middle transmission plate
- 62: left transmission plate
- 63: right transmission plate
- 64: middle joint
- 65: left joint
- 66: right joint
- 67: tie-rod
- 68: downstream side steering shaft (an example of a front shaft member)
- 70: steer stopper mechanism
- 72: right abutment wall
- 73: left abutment wall
- 80: connecting member
- 81: rear element
- 82: rear fixing portion
- 83: rear thread portion
- 84: bolt member
- 85: front element
- 86: front fixing portion
- 87: front thread portion
- 92: right frame
- 91: left frame
- 93: first recess portion
- 94: second recess portion
- 95: front tightening portion
- 96: rear tightening portion
- 212a: front shaft supporting portion
- 211: headstock
- 212: link supporting portion
- 213: engine supporting portion
- 221: front cover
- 223: front mudguard
- 224: rear mudguard
- 317: left bracket
- 327: right bracket
- 321: right axle member
- 512: plate member
- 522a: front plate member (front cross element)
- 522b: rear plate member (rear cross element)
- 523a: left connecting block
- 523b: right connecting block
- 921: right middle frame
- 911: left middle frame
- 922: first right middle frame
- 923: second right middle frame
- 912: first left middle frame
- 913: second left middle frame
- 914: left block body
- 924: right block body
- A: connecting portion
- C: connecting portion
- E: connecting portion
- G: connecting portion
- H: connecting portion
- I: connecting portion
- M: middle upper axis (an example of a link axis)
- V: rear end edge of movable range of rear plate member
- X: left steering axis
- Y: right steering axis
- Z: middle steering axis

## Claims

1. A vehicle (1) having:
a body frame (21) that can lean to the right of the vehicle (1) when the vehicle (1) turns right and can lean to the left of the vehicle (1) when the vehicle (1) turns left;
a right front wheel (32) and a left front wheel (31) that are provided so as to be aligned side by side in a left-and-right direction of the body frame (21);
a link mechanism (5) that has a cross member (51) that is configured to turn about a link axis (M) that is configured to extend in a front-and-rear direction of the body frame (21) relative to the body frame (21), which is configured to support the right front wheel (32) and the left front wheel (31) so as to be displaced relatively in an up-and-down direction of the body frame (21) and which is configured to support the right front wheel (32) so as to turn about a right steering axis (Y) that is configured to extend in the up-and-down direction of the body frame (21) and is configured to support the left front wheel (31) so as to turn about a left steering axis (X) that is parallel to the right steering axis (Y); and a steering force transmission mechanism (6) that has a steering force input portion (23) that is situated between the right steering axis (Y) and the left steering axis (X) when seen from the front of the vehicle (1) and which is provided so as to turn about a middle steering axis (a) that is parallel to the right steering axis (Y) and which is configured to transmit a steering force that is input into the steering force input portion (23) to the right front wheel (32) and the left front wheel (31); **characterized by** a steer lock mechanism (40) that makes it impossible for the right front wheel (32) and the left front wheel (31) to be steered, wherein
the steering force transmission mechanism (6) has:
a rear shaft member (60) into which a steering force is input from the steering force input portion (23) and which can turn about a rear steering axis (a);
a front shaft member (68) that is situated ahead of the rear shaft member (60) in relation to the front-and-rear direction of the body frame (21) and which can turn about a front steering axis (b); and
a connecting member (80, 80B, 80C) that is configured to transmit the turning of the rear shaft member (60) to the front shaft member (68), wherein
a distance between the front shaft member (68) and the right steering axis (Y) is smaller than a distance between the rear shaft member (60) and the right steering axis (Y) when seen from the side of the vehicle (1), and wherein
the front shaft member (68) or a member that is configured to turn together with the front shaft member (68) and at least a part of the steer lock mechanism (40) that is mounted on a member that is displaced relative to the front shaft member (68) or the member that is configured to turn together with the front shaft member (68) are provided in a position that is configured to overlap a movable range (V) of the link mechanism (5) when seen from the side of the vehicle (1).

2. The vehicle (1) according to Claim 1, wherein
when seen from the front of the vehicle (1) that is standing upright, at least part of the steer lock mechanism (40) is provided above or below the cross member (51).

3. The vehicle (1) according to Claim 1, wherein
when the vehicle (1) is divided into three areas of a right portion, a middle portion (CEN) and a left portion in the left-and-right direction of the body frame (21) when seen from the front of the vehicle (1) that is standing upright, at least a part of the steer lock mechanism (40) is situated in the middle portion (CEN).

4. The vehicle (1) according to Claim 1, wherein
the connecting member (80B) is a link that is connected to the front shaft member (68) or the rear shaft member (60) via a turning axis (x) that is different from the front steering axis (b) or the rear steering axis (a) so as to turn and which is displaced as the rear shaft member (60) turns to thereby turn the front shaft member (68).

5. The vehicle (1) according to Claim 1, wherein
the connecting member (80C) has a right element (81A) that is provided on the right of the front shaft member (68) in relation to the left-and-right direction of the body frame (21) to thereby connect the front shaft member (68) and the rear shaft member (60) together and a left element (81B) that is provided on the left of the front shaft member (68) in relation to the left-and-right direction of the body frame (21) to thereby connect the front shaft member (68) and the rear shaft member (60) together.

6. The vehicle (1) according to Claim 1, wherein
the steer lock mechanism (40) has:
a first portion (42) that is attached to the front shaft member (68) or a member that is configured to turn together with the front shaft member (68); and
a second portion (41) that is attached to a member that is displaced relative to the front shaft member (68) or the member that is configured to turn together with the front shaft member (68), wherein
the first portion (42) and the second portion (41) are brought into abutment with each other so as to make it impossible for the first portion (42) and the second portion (41) to be displaced relatively to thereby make it impossible for the right front wheel (32) and the left front wheel (31) to turn, and wherein
an abutment portion between the first portion (42) and the second portion (41) is provided on one side of the front shaft member (68) in the left-and-right direction of the body frame (21), and the connecting member (80) is provided on the other side of the front shaft member (68) in the left-and-right direction of the body frame (21).

7. The vehicle (1) according to Claim 1, wherein
the steer lock mechanism (40) has:
a first portion (42) that is attached to the front shaft member (68) or a member that is configured to turn together with the front shaft member (68); and
a second portion (41) that is attached to a member that is displaced relative to the front shaft member (68) or the member that is configured to turn together with the front shaft member (68), wherein
a pin member (44) that is activated to operate by an actuator is provided on one of the first portion (42) and the second portion (41), wherein
a pin receiving portion (45) that is configured to receive the pin member (44) is provided on the other of the first portion (42) and the second portion (41), and wherein
the actuator is activated to operate to bring the pin member (44) into abutment with the pin receiving portion (45) so as to make it impossible for the first portion (42) and the second portion (41) to turn relatively to thereby make it impossible for the right front wheel (32) and the left front wheel (31) to turn.

8. The vehicle (1) according to Claim 1, wherein
the front steering axis (b) and the rear steering axis (a) are parallel.

9. The vehicle (1) according to Claim 1, wherein
a steer stopper mechanism (70) that is configured to restrict a maximum steering angle of the right front wheel (32) and the left front wheel (31) is mounted on the front shaft member (68) or the member that is configured to turn together with the front shaft member (68) and a member that is displaced relative to the front shaft member (68) when the front shaft member (68) is configured to turn, and wherein
at least part of the steer stopper mechanism (70) is provided in a position that is configured to overlap the movable range (V) of the link mechanism (5) when seen from the side of the vehicle (1).

10. The vehicle (1) according to Claim 1, wherein
a steer stopper mechanism (70A) that is configured to restrict a maximum steering angle of the right front wheel (32) and the left front wheel (31) is mounted on the rear shaft member (60) or a member that is configured to turn together with the rear shaft member (60) and a member that is displaced relative to the rear shaft member (60) when the rear shaft member (60) is configured to turn.

11. The vehicle (1) according to Claim 1, wherein
the front shaft member (68) on which the steer lock mechanism (40) is provided is thicker than the rear shaft member (60).

12. The vehicle (1) according to Claim 1, wherein
the link mechanism (5) has:
a right side member (54) that is configured to support the right front wheel (32) so as to turn about the right steering axis (Y) that is configured to extend in the up-and-down direction of the body frame (21); and
a left side member (53) that is configured to support the left front wheel (31) so as to turn about the left steering axis (X) that is parallel to the right steering axis (Y), wherein
the cross member (51, 52) has:
an upper cross member (51) that is configured to support an upper portion of the right side member (54) at a right end portion thereof so as to allow the upper portion to turn about a right upper axis that is configured to extend in the front-and-rear direction of the body frame (21), which is configured to support an upper portion of the left side member (53) at a left end portion thereof so as to allow the upper portion to turn about a left upper axis that is parallel to the right upper axis and which is supported on the body frame (21) at a middle portion thereof so as to turn about a middle upper axis (M) that is parallel to the right upper axis; and
a lower cross member (52) that is configured to support a lower portion of the right side member (54) at a right end portion thereof so as to allow the lower portion to turn about a right lower axis that is configured to extend in the front-and-rear direction of the body frame (21), which is configured to support a lower portion of the left side member (53) at a left end portion thereof so as to allow the lower portion to turn about a left lower axis that is parallel to the right upper axis and which is supported on the body frame (21) at a middle portion thereof so as to turn about a middle lower axis (Q) that is parallel to the right upper axis, and wherein
the front shaft member (68) on which the steer lock mechanism (40) is provided is longer than a distance between the middle upper axis (M) and the middle lower axis (Q).

13. The vehicle (1) according to Claim 12, wherein
the front shaft member (68) on which the steer lock mechanism (40) is provided is thicker than an upper end portion of the right side member (54) or an upper end portion of the left side member (53).

14. The vehicle (1) according to Claim 12, wherein
the front shaft member (68) on which the steer lock mechanism (40) is provided is longer than the right side member (54) or the left side member (53).

15. The vehicle (1) according to Claim 1, wherein
the cross member has an upper cross member (51) and a lower cross member (52) that is provided below the upper cross member (51), wherein
the body frame (21) has an upper supporting portion (C) that is configured to support the upper cross member (51) so as to turn and a lower supporting portion (I) that is configured to support the lower cross member (52) so as to turn, and wherein
the front shaft member (68) is configured to penetrate the body frame (21) so that the front shaft member (68) is configured to pass the upper supporting portion (C) and the lower supporting portion (I) when seen from the front of the vehicle (1).

16. The vehicle (1) according to Claim 1, wherein
the body frame (21) has a link supporting portion (212) that is configured to support the cross member (51, 52) so as to turn, wherein
the cross member (52) has a front cross element (522a) that is situated ahead of the link supporting portion (212) and a rear cross element (522b) that is situated behind the link supporting portion (212), and wherein
the front steering axis (b) of the front shaft member (68) is situated between a front end of the front cross element (522a) and a rear end of the rear cross element (522b).

17. The vehicle (1) according to Claim 1, wherein
the body frame (21) has a pipe-shaped link supporting portion (212) that is configured to support the cross member (51, 52) so as to turn, wherein
the front shaft member (68) is provided coaxially with the pipe-shaped link supporting portion (212), and wherein
at least a part of the front shaft member (68) is inserted into an interior of the pipe-shaped link supporting portion (212).

## Patentansprüche

1. Fahrzeug (1), das aufweist:
einen Karosserierahmen (21), der sich zur rechten Seite des Fahrzeugs (1) neigen kann, wenn das Fahrzeug (1) nach rechts abbiegt, und sich zur linken Seite des Fahrzeugs (1) neigen kann, wenn das Fahrzeug (1) nach links abbiegt;
ein rechtes Vorderrad (32) und ein linkes Vorderrad (31), die so angeordnet sind, dass sie in einer Querrichtung des Karosserierahmens (21) nebeneinander ausgerichtet sind;
einen Gelenk-Mechanismus (5), der ein Quer-Element (51) aufweist, das so eingerichtet ist, dass es sich relativ zu dem Karosserierahmen (21) um eine Gelenk-Achse (M) herum dreht, die in einer Längsrichtung des Karosserierahmens (21) verläuft, der so eingerichtet ist, dass er das rechte Vorderrad (32) und das linke Vorderrad (31) so trägt, dass sie in einer vertikalen Richtung des Karosserierahmens (21) relativ verschoben werden, und der so eingerichtet ist, dass er das rechte Vorderrad (32) so trägt, dass es sich um eine rechte Lenk-Achse (Y) herum dreht, die so eingerichtet ist, dass sie in der vertikalen Richtung des Karosserierahmens (21) verläuft, und so eingerichtet ist, dass er das linke Vorderrad (31) so trägt, dass es sich um eine linke Lenk-Achse (X) herum dreht, die parallel zu der rechten Lenk-Achse (Y) ist; sowie
einen Lenkkraftübertragungs-Mechanismus (6), der einen Lenkkrafteingabe-Abschnitt (23) aufweist, der sich, von der Vorderseite des Fahrzeugs (1) aus gesehen, zwischen der rechten Lenk-Achse (Y) und der linken Lenk-Achse (X) befindet und so angeordnet ist, dass er sich um eine mittlere Lenk-Achse (a) herum dreht, die parallel zu der rechten Lenk-Achse (Y) ist, und der so eingerichtet ist, dass er eine Lenkkraft, die in den Lenkkrafteingabe-Abschnitt (23) eingegeben wird, auf das rechte Vorderrad (32) und das linke Vorderrad (31) überträgt;
**gekennzeichnet durch**
einen Lenkverriegelungs-Mechanismus (40), der es unmöglich macht, das rechte Vorderrad (32) und das linke Vorderrad (31) zu lenken, wobei der Lenkkraftübertragungs-Mechanismus (6) aufweist:
ein hinteres Wellen-Element (60), in das eine Lenkkraft von dem Lenkkrafteingabe-Abschnitt (23) eingegeben wird und das sich um eine hintere Lenk-Achse (a) herum drehen kann;
ein vorderes Wellen-Element (68), das sich in Bezug auf die Längsrichtung des Karosserierahmens (21) vor dem hinteren Wellen-Element (60) befindet und sich um eine vordere Lenk-Achse (b) herum drehen kann; sowie
ein Verbindungs-Element (80, 80B, 80C), das so eingerichtet ist, dass es die Drehung des hinteren Wellen-Elementes (60) auf das vordere Wellen-Element (68) überträgt, wobei
ein Abstand zwischen dem vorderen Wellen-Element (68) und der rechten Lenk-Achse (Y), von der Seite des Fahrzeugs (1) aus gesehen, kleiner ist als ein Abstand zwischen dem hinteren Wellen-Element (60) und der rechten Lenk-Achse (Y), und wobei
das vordere Wellen-Element (68) oder ein Element, das so eingerichtet ist, dass es sich zusammen mit dem vorderen Wellen-Element (68) dreht, und wenigstens ein Teil des Lenkverriegelungs-Mechanismus (40), der an einem Element, das relativ zu dem vorderen Wellen-Element (68) versetzt wird, oder dem Element angebracht ist, das so eingerichtet ist, dass es sich zusammen mit dem vorderen Wellen-Element (68) dreht, sich an einer Position befinden, die so eingerichtet ist, dass sie, von der Seite des Fahrzeugs (1) aus gesehen, einen Bewegungsbereich (V) des Gelenk-Mechanismus (5) überlappt.

2. Fahrzeug (1) nach Anspruch 1, wobei
von der Vorderseite des Fahrzeugs (1) aus gesehen, das aufrecht steht, sich wenigstens ein Teil des Lenkverriegelungs-Mechanismus (40) oberhalb oder unterhalb des Quer-Elementes (51) befindet.

3. Fahrzeug (1) nach Anspruch 1, wobei
wenn das Fahrzeug (1), von der Vorderseite des aufrecht stehenden Fahrzeugs (1) aus gesehen, in drei Bereiche, d. h., einen rechten Abschnitt, einen mittleren Abschnitt (CEN) und einen linken Abschnitt, in der Querrichtung des Karosserierahmens (21) unterteilt wird, wenigstens ein Teil des Lenkverriegelungs-Mechanismus (40) sich in dem mittleren Abschnitt (CEN) befindet.

4. Fahrzeug (1) nach Anspruch 1, wobei
das Verbindungs-Element (80B) ein Gelenk ist, dass über eine Dreh-Achse (x), die sich von der vorderen Lenk-Achse (b) oder der hinteren Lenk-Achse (a) unterscheidet, mit dem vorderen Wellen-Element (68) oder dem hinteren Wellen-Element (60) verbunden ist, so dass es sich dreht, und das verschoben wird, wenn sich das hintere Wellen-Element (60) dreht und so das vordere Wellen-Element (68) dreht.

5. Fahrzeug (1) nach Anspruch 1, wobei
das Verbindungs-Element (80C) ein rechtes Teil (81A), das sich an der rechten Seite des vorderen Wellen-Elementes (68) in Bezug auf die Querrichtung des Karosserierahmens (21) befindet und so das vordere Wellen-Element (68) und das hintere Wellen-Element (60) miteinander verbindet, sowie ein linkes Teil (81B) aufweist, das sich an der linken Seite des vorderen Wellen-Elementes (68) in Bezug auf die Querrichtung des Karosserierahmens (21) befindet und so das vordere Wellen-Element (68) und das hintere Wellen-Element (60) miteinander verbindet.

6. Fahrzeug (1) nach Anspruch 1, wobei
der Lenkverriegelungs-Mechanismus (40) aufweist:
einen ersten Abschnitt (42), der an dem vorderen Wellen-Element (68) oder einem Element angebracht ist, das so eingerichtet ist, dass es sich zusammen mit dem vorderen Wellen-Element (68) dreht; sowie
einen zweiten Abschnitt (41), der an einem Element, das relativ zu dem vorderen Wellen-Element (68) versetzt wird, oder dem Element angebracht ist, das so eingerichtet ist, dass es sich zusammen mit dem vorderen Wellen-Element (68) dreht, wobei
der erste Abschnitt (42) und der zweite Abschnitt (41) zum Anliegen aneinander gebracht werden, so dass es unmöglich wird, dass sich das rechte Vorderrad (32) und das linke Vorderrad (31) drehen, und wobei
ein Abschnitt, an dem der erste Abschnitt (42) und der zweite Abschnitt (41) aneinander anliegen, sich an einer Seite des vorderen Wellen-Elementes (68) in der Querrichtung des Karosserierahmens (21) befindet, und das Verbindungs-Element (80) sich an der anderen Seite des vorderen Wellen-Elementes (68) in der Querrichtung des Karosserierahmens (21) befindet.

7. Fahrzeug (1) nach Anspruch 1, wobei
der Lenkverriegelungs-Mechanismus (40) aufweist:
einen ersten Abschnitt (42), der an dem vorderen Wellen-Element (68) oder einem Element angebracht ist, das so eingerichtet ist, dass es sich zusammen mit dem vorderen Wellen-Element (68) dreht; sowie
einen zweiten Abschnitt (41), der an einem Element, das relativ zu dem vorderen Wellen-Element (68) versetzt wird, oder dem Element angebracht ist, das so eingerichtet ist, dass es sich zusammen mit dem vorderen Wellen-Element (68) dreht, wobei
ein Bolzen-Element (44), das aktiviert wird und durch ein Betätigungselement betätigt wird, sich an dem ersten Abschnitt (42) oder dem zweiten Abschnitt (41) befindet, wobei
ein Bolzenaufnahme-Abschnitt (45), der so eingerichtet ist, dass er das Bolzen-Element (44) aufnimmt, sich an dem anderen von dem ersten Abschnitt (42) und dem zweiten Abschnitt (41) befindet, und
das Betätigungselement aktiviert wird und durch Betätigung das Bolzen-Element (44) zum Anlegen an dem Bolzenaufnahme-Abschnitt (45) bringt, so dass es unmöglich wird, dass sich der erste Abschnitt (42) und der zweite Abschnitt (41) relativ zueinander drehen, so dass es unmöglich wird, dass sich das rechte Vorderrad (32) und das linke Vorderrad (31) drehen.

8. Fahrzeug (1) nach Anspruch 1, wobei
die vordere Lenk-Achse (b) und die hintere Lenk-Achse (a) parallel sind.

9. Fahrzeug (1) nach Anspruch 1, wobei
ein Lenkanschlag-Mechanismus (70), der so eingerichtet ist, dass er einen maximalen Lenkwinkel des rechten Vorderrades (32) und des linken Vorderrades (31) beschränkt, an dem vorderen Wellen-Element (68) oder dem Element, das so eingerichtet ist, dass es sich zusammen mit dem vorderen Wellen-Element (68) dreht, und einem Element angebracht ist, das relativ zu dem vorderen Wellen-Element (68) versetzt wird, wenn das vordere Wellen-Element (68) so eingerichtet ist, dass es sich dreht, und wobei
wenigstens ein Teil des Lenkanschlag-Mechanismus (70) sich an einer Position befindet, die so eingerichtet ist, dass sie den Bewegungsbereich (V) des Gelenk-Mechanismus, von der Seite des Fahrzeugs (1) aus gesehen, überlappt.

10. Fahrzeug (1) nach Anspruch 1, wobei
ein Lenkanschlag-Mechanismus (70A), der so eingerichtet ist, dass er einen maximalen Lenkwinkel des rechten Vorderrades (32) und des linken Vorderrades (31) beschränkt, an dem hinteren Wellen-Element (60) oder einem Element, das so eingerichtet ist, dass es sich zusammen mit dem hinteren Wellen-Element (60) dreht, und einem Element angebracht ist, das relativ zu dem hinteren Wellen-Element (60) versetzt wird, wenn das vordere Wellen-Element (60) so eingerichtet ist, dass es sich dreht.

11. Fahrzeug (1) nach Anspruch 1, wobei
das vordere Wellen-Element (68), an dem sich der Lenkverriegelungs-Mechanismus (40) befindet, dicker ist als das hintere Wellen-Element (60).

12. Fahrzeug (1) nach Anspruch 1, wobei
der Gelenk-Mechanismus (5) aufweist:
ein rechtes Seiten-Element (54), das so eingerichtet ist, dass es das rechte Vorderrad (32) so trägt, dass es sich um die rechte Lenk-Achse (Y) herum dreht, die so eingerichtet ist, dass sie sich in der vertikalen Richtung des Karosserierahmens (21) erstreckt; und
ein linkes Seiten-Element (53), das so eingerichtet ist, dass es das linke Vorderrad (31) so trägt, dass es sich um die linke Lenk-Achse (X) herum dreht, die parallel zu der rechten Lenk-Achse (Y) ist, wobei
das Quer-Element (51, 52) aufweist:
ein oberes Quer-Element (51), das so eingerichtet ist, dass es einen oberen Abschnitt des rechten Seiten-Elementes (54) an einem rechten End-Abschnitt desselben so trägt, dass sich der obere Abschnitt um eine rechte obere Achse herum drehen kann, die so eingerichtet ist, dass sie in der Längsrichtung des Karosserierahmens (21) verläuft, das so eingerichtet ist, dass es einen oberen Abschnitt des linken Seiten-Elementes (53) an einem linken End-Abschnitt desselben so trägt, dass sich der obere Abschnitt um eine linke obere Achse herum drehen kann, die parallel zu der rechten oberen Achse ist, und das an dem Karosserierahmen (21) an einem mittleren Abschnitt desselben so gelagert ist, dass es sich um eine mittlere obere Achse (M) herum dreht, die parallel zu der rechten oberen Achse ist; sowie
ein unteres Quer-Element (52), das so eingerichtet ist, dass es einen unteren Abschnitt des rechten Seiten-Elementes (54) an einem rechten End-Abschnitt desselben so trägt, dass sich der untere Abschnitt um eine rechte untere Achse herum drehen kann, die so eingerichtet ist, dass sie in der Längsrichtung des Karosserierahmens (21) verläuft, das so eingerichtet ist, dass es einen unteren Abschnitt des linken Seiten-Elementes (53) an einem linken End-Abschnitt desselben so trägt, dass sich der untere Abschnitt um eine linke untere Achse herum drehen kann, die parallel zu der rechten oberen Achse ist, und das an dem Karosserierahmen (21) an einem mittleren Abschnitt desselben so gelagert ist, dass es sich um eine mittlere untere Achse (Q) herum dreht, die parallel zu der rechten oberen Achse ist; und wobei
das vordere Wellen-Element (68), an dem sich der Lenkverriegelungs-Mechanismus (40) befindet, länger ist als ein Abstand zwischen der mittleren oberen Achse (M) und der mittleren unteren Achse (Q).

13. Fahrzeug (1) nach Anspruch 12, wobei
das vordere Wellen-Element (68), an dem sich der Lenkverriegelungs-Mechanismus (40) befindet, dicker ist als ein oberer End-Abschnitt des rechten Seiten-Elementes (54) oder ein oberer End-Abschnitt des linken Seiten-Elementes (53)

14. Fahrzeug (1) nach Anspruch 12, wobei
das vordere Wellen-Element (68), an dem sich der Lenkverriegelungs-Mechanismus (40) befindet, länger ist als das rechte Seiten-Element (54) oder das linke Seiten-Element (53).

15. Fahrzeug (1) nach Anspruch 1, wobei
das Quer-Element ein oberes Quer-Element (51) sowie ein unteres Quer-Element (52) aufweist, das sich unterhalb des oberen Quer-Elementes (51) befindet,
der Karosserierahmen (21) einen oberen Lagerungs-Abschnitt (C), der so eingerichtet ist, dass er das obere Quer-Element (51) so lagert, dass es sich dreht, sowie einen unteren Lagerungs-Abschnitt (l) aufweist, der so eingerichtet ist, dass er das untere Quer-Element (52) so lagert, dass es sich dreht, und
das vordere Wellen-Element (68) so eingerichtet ist, dass es sich durch den Karosserierahmen (21) hindurch erstreckt, so dass das vordere Wellen-Element (68) so eingerichtet ist, dass es, von der Vorderseite des Fahrzeugs (1) aus gesehen, den oberen Lagerungs-Abschnitt (C) und den unteren Lagerungs-Abschnitt (l) passiert.

16. Fahrzeug (1) nach Anspruch 1, wobei
der Karosserierahmen (21) einen Gelenklagerungs-Abschnitt (212) aufweist, der so eingerichtet ist, dass er das Quer-Element (51, 52) so lagert, dass es sich dreht, wobei
das Quer-Element (52) ein vorderes Quer-Element (522a), das sich vor dem Gelenklagerungs-Abschnitt (212) befindet, sowie ein hinteres Quer-Element (522b) aufweist, das sich hinter dem Gelenklagerungs-Abschnitt (212) befindet, und
die vordere Lenk-Achse (b) des vorderen Wellen-Elementes (68) sich zwischen einem vorderen Ende des vorderen Quer-Elementes (522a) und einem hinteren Ende des hinteren Quer-Elementes (522b) befindet.

17. Fahrzeug (1) nach Anspruch 1, wobei
der Karosserierahmen (21) einen rohrförmigen Gelenklagerungs-Abschnitt (212) aufweist, der so eingerichtet ist, dass er das Quer-Element (51, 52) so lagert, dass es sich dreht, wobei
das vordere Wellen-Element (68) koaxial zu dem rohrförmigen Gelenklagerungs-Abschnitt (212) ist, und
wenigstens ein Teil des vorderen Wellen-Elementes (68) in einen Innenraum des rohrförmigen Gelenklagerungs-Abschnitts (212) eingeführt ist.

## Revendications

1. Véhicule (1) comportant :
un châssis (21) pouvant s'incliner vers la droite du véhicule (1) quand le véhicule (1) tourne à droite et s'incliner vers la gauche du véhicule (1) quand le véhicule (1) tourne à gauche ;
une roue avant droite (32) et une roue avant gauche (31) qui sont agencées de telle manière qu'elles sont alignées côte à côte dans une direction gauche/droite du châssis (21);
un mécanisme de liaison (5) qui présente une traverse (51) configurée pour tourner autour d'un axe de liaison (M) configuré de manière à s'étendre dans une direction avant/arrière du châssis (21) par rapport au châssis (21) configuré pour porter la roue avant droite (32) et la roue avant gauche (31) de façon à se déplacer de manière relative dans une direction haut/bas du châssis (21) et configuré porter la roue avant droite (32) pour tourner autour d'un axe de direction droit (Y) configuré pour s'étendre dans la direction haut/bas du châssis (21) et configuré pour porter la roue avant gauche (31) pour tourner autour d'un axe de direction gauche (X) parallèle à l'axe de direction droit (Y) ;
et
un mécanisme de transmission de force de direction (6) qui présente une section d'entrée de force de direction (23) située entre l'axe de direction droit (Y) et l'axe de direction gauche (X) dans une vue depuis l'avant du véhicule (1) et fournie de manière à tourner autour d'un axe de direction central (a) parallèle à l'axe de direction droit (Y) et configuré pour transmettre une force de direction entrée dans la section d'entrée de force de direction (23) à destination de la roue avant droite (32) et de la roue avant gauche (31) ; **caractérisé par**
un mécanisme de verrouillage de direction (40) qui interdit le pilotage de la roue avant droite (32) et de la roue avant gauche (31), où
le mécanisme de transmission de force de direction (6) comporte :
un élément d'arbre arrière (60) dans lequel est entré une force de direction à partir de la section d'entrée de force de direction (23) et qui peut tourner autour d'un axe de direction arrière (a) ;
un élément d'arbre avant (68) qui est situé en avant de l'élément d'arbre arrière (60) dans la direction avant/arrière du châssis (21) et qui peut tourner autour d'un axe de direction avant (b) ; et
un élément de connexion (80, 80B, 80C) configuré pour transmettre la rotation de l'élément d'arbre arrière (60) à l'élément d'arbre avant (68), où
une distance entre l'élément d'arbre avant (68) et l'axe de direction droit (Y) est plus petite qu'une distance entre l'élément d'arbre arrière (60) et l'axe de direction droit (Y) dans une vue de côté du véhicule (1), et où
l'élément d'arbre avant (68) ou un élément configuré pour tourner conjointement avec l'élément d'arbre avant (68) et au moins une partie du mécanisme de verrouillage de direction (40) montée sur un élément déplaçable par rapport à l'élément d'arbre avant (68) ou l'élément configuré pour tourner conjointement avec l'élément d'arbre avant (68) sont agencés en une position configurée pour se superposer à une plage de mouvement (V) du mécanisme de liaison (5) dans une vue de côté du véhicule (1).

2. Véhicule (1) selon la revendication 1, où
dans une vue depuis l'avant du véhicule (1) en position verticale, au moins une partie du mécanisme de verrouillage de direction (40) est disposée au-dessus ou sous la traverse (51).

3. Véhicule (1) selon la revendication 1, où
lorsque l'on divise le véhicule (1) en trois zones, à savoir une section droite, une section centrale (CEN) et une section gauche dans la direction gauche/droite du châssis (21) dans une vue depuis l'avant du véhicule (1) en position verticale, au moins une partie du mécanisme de verrouillage de direction (40) est située dans la section centrale (CEN).

4. Véhicule (1) selon la revendication 1, où
l'élément de connexion (80B) est une liaison connectée à l'élément d'arbre avant (68) ou à l'élément d'arbre arrière (60) par l'intermédiaire d'un axe de rotation (X) qui est différent de l'axe de direction avant (b) ou de l'axe de direction arrière (a), de manière à tourner et se déplacer lorsque l'élément d'arbre arrière (60) tourne, pour ainsi tourner l'élément d'arbre avant (68).

5. Véhicule (1) selon la revendication 1, où
l'élément de connexion (80B) présente un élément droit (81A) disposé sur la droite de l'élément d'arbre avant (68) dans la direction gauche/droite du châssis (21) pour ainsi connecter l'un à l'autre l'élément d'arbre avant (68) et l'élément d'arbre arrière (60) et un élément gauche (81B) disposé sur la gauche de l'élément d'arbre avant (68) dans la direction gauche/droite du châssis (21) pour ainsi connecter l'un à l'autre l'élément d'arbre avant (68) et l'élément d'arbre arrière (60).

6. Véhicule (1) selon la revendication 1, où
le mécanisme de verrouillage de direction (40) comporte :
une première section (42) attachée à l'élément d'arbre avant (68) ou à un élément configuré pour tourner conjointement avec l'élément d'arbre avant (68) ; et
une seconde section (41) attachée à un élément qui est déplacé par rapport à l'élément d'arbre avant (68) ou l'élément configuré pour tourner conjointement avec l'élément d'arbre avant (68), où
la première section (42) et la seconde section (41) sont amenées en butée l'une contre l'autre de manière à interdire à la première section (42) et la seconde section (41) de se déplacer de manière relative pour ainsi interdire à la roue avant droite (32) et la roue avant gauche (31) de tourner, et où
une section de butée entre la première section (42) et la seconde section (41) est agencée sur un côté de l'élément d'arbre avant (68) dans la direction gauche/droite du châssis (21), et l'élément de connexion (80) est agencé sur l'autre côté de l'élément d'arbre avant (68) dans la direction gauche/droite du châssis (21).

7. Véhicule (1) selon la revendication 1, où
le mécanisme de verrouillage de direction (40) comporte :
une première section (42) attachée à l'élément d'arbre avant (68) ou à un élément configuré pour tourner conjointement avec l'élément d'arbre avant (68) ; et
une seconde section (41) attachée à un élément qui est déplacé par rapport à l'élément d'arbre avant (68) ou l'élément configuré pour tourner conjointement avec l'élément d'arbre avant (68), où
un élément formant goupille (44) actionné par un actionneur est agencé sur l'une des sections que sont la première section (42) et la seconde section (41), où
une section de réception de goupille (45) configurée pour recevoir l'élément formant goupille (44) est agencée sur l'autre des sections que sont la première section (42) et la seconde section (41), et où
l'actionneur est actionné pour amener l'élément formant goupille (44) en butée avec la section de réception de goupille (45) pour interdire à la première section (42) et à la seconde section (41) de tourner de manière relative pour ainsi interdire à la roue avant droite (32) et à la roue avant gauche (31) de tourner.

8. Véhicule (1) selon la revendication 1, où
l'axe de direction avant (b) et l'axe de direction arrière (a) sont parallèles l'un à l'autre.

9. Véhicule (1) selon la revendication 1, où
un mécanisme de butée de direction (70) configuré pour restreindre un angle de direction maximal de la roue avant droite (32) et de la roue avant gauche (31) est monté sur l'élément d'arbre avant (68) ou l'élément configuré pour tourner conjointement avec l'élément d'arbre avant (68) et un élément déplacé par rapport à l'élément d'arbre avant (68) quand l'élément d'arbre avant (68) est configuré pour tourner, et où
au moins une partie du mécanisme de butée de direction (70) est agencé en une position configurée pour se superposer à la plage de déplacement (V) du mécanisme de liaison (5) dans une vue de côté du véhicule (1).

10. Véhicule (1) selon la revendication 1, où
un mécanisme de butée de direction (70A) configuré pour restreindre un angle de direction maximal de la roue avant droite (32) et de la roue avant gauche (31) est monté sur l'élément d'arbre arrière (60) ou un élément configuré pour tourner conjointement avec l'élément d'arbre arrière (60) et un élément déplacé par rapport à l'élément d'arbre arrière (60) quand l'élément d'arbre arrière (60) est configuré pour tourner.

11. Véhicule (1) selon la revendication 1, où
l'élément d'arbre avant (68) sur lequel est agencé le mécanisme de verrouillage (40) est plus épais que l'élément d'arbre arrière (60).

12. Véhicule (1) selon la revendication 1, où
le mécanisme de liaison (5) comporte :
un élément côté droit (54) configuré pour porter la roue avant droite (32) de manière à tourner autour de l'axe de direction droit (Y) configuré de manière à s'étendre dans la direction haut/bas du châssis (21); et
un élément côté gauche (53) configuré pour porter la roue avant gauche (31) de manière à tourner autour de l'axe de direction gauche (X) parallèle à l'axe de direction droit (Y), où
la traverse (51, 52) comporte :
une traverse supérieure (51) configurée pour porter une section supérieure de l'élément côté droit (54) au niveau de sa section d'extrémité droite, de manière à permettre à la section supérieure de tourner autour d'un axe supérieur droit configuré de manière à s'étendre dans la direction avant/arrière du châssis (21), configurée pour porter une section supérieure de l'élément côté gauche (53) au niveau de sa section d'extrémité gauche, de manière à permettre à la section supérieure de tourner autour d'un axe supérieur gauche parallèle à l'axe supérieur droit et supportée sur le châssis (21) au niveau de sa section centrale de manière à tourner autour d'un axe supérieur central (M) parallèle à l'axe supérieur droit ; et
une traverse inférieure (52) configurée pour porter une section inférieure de l'élément côté droit (54) au niveau de sa section d'extrémité droite, de manière à permettre à la section inférieure de tourner autour d'un axe inférieur droit configuré de manière à s'étendre dans la direction avant/arrière du châssis (21), configurée pour porter une section inférieure de l'élément côté gauche (53) au niveau de sa section d'extrémité gauche, de manière à permettre à la section inférieure de tourner autour d'un axe inférieur gauche parallèle à l'axe supérieur droit et supportée sur le châssis (21) au niveau de sa section centrale de manière à tourner autour d'un axe inférieur central (M) parallèle à l'axe supérieur droit ; et où
l'élément d'arbre avant (68) sur lequel est disposé le mécanisme de verrouillage de direction (40) est plus long qu'une distance entre l'axe supérieur central (M) et l'axe inférieur central (Q).

13. Véhicule (1) selon la revendication 12, où
l'élément d'arbre avant (68) sur lequel est agencé le mécanisme de verrouillage de direction (40) est plus épais qu'une section d'extrémité supérieure de l'élément côté droit (54) ou qu'une section d'extrémité supérieure de l'élément côté gauche (53).

14. Véhicule (1) selon la revendication 12, où
l'élément d'arbre avant (68) sur lequel est disposé le mécanisme de verrouillage de direction (40) est plus long que l'élément côté droit (54) ou l'élément côté gauche (53).

15. Véhicule (1) selon la revendication 1, où
la traverse comporte une traverse supérieure (51) et une traverse inférieure (52) agencée sous la traverse supérieure (51), où
le châssis (21) comporte une section de support supérieure (C) configurée pour porter la traverse supérieure (51) de manière à tourner et une section de support inférieure (I) configurée pour porter la traverse inférieure (52) de manière à tourner, et où
l'élément d'arbre avant (68) est configuré pour pénétrer dans le châssis (21) de telle manière que l'élément d'arbre avant (68) est configuré pour passer à côté de la section de support supérieure (C) et la section de support inférieure (I) dans une vue depuis l'avant du véhicule (1).

16. Véhicule (1) selon la revendication 1, où
le châssis (21) comporte une section de support de liaison (212) configurée pour porter la traverse (51, 52) de manière à tourner, où
la traverse (52) comporte un élément transversal avant (522a) situé en avant de la section de support de liaison (212) et un élément transversal arrière (522b) situé derrière la section de support de liaison (212), et où
l'axe de direction avant (b) de l'élément d'arbre avant (68) est situé entre une extrémité avant de l'élément transversal avant (522a) et une extrémité arrière de l'élément transversal arrière (522b).

17. Véhicule (1) selon la revendication 1, où
le châssis (21) comporte une section de support de liaison en forme de tuyau (212) configurée pour porter la traverse (51, 52) de manière à tourner, où
l'élément d'arbre avant (68) est agencé de manière coaxiale avec la section de support de liaison en forme de tuyau (212), et où
au moins une partie de l'élément d'arbre avant (68) est insérée à l'intérieur de la section de support de liaison en forme de tuyau (212).
